# FASCICULE DE BREVET EUROPEEN

(11) **EP 1 054 343 B1**
(45) Date de publication et mention de la délivrance du brevet: **06.04.2011**
(21) Numéro de dépôt: 00401353.8
(22) Date de dépôt: 17.05.2000
(51) Int. Cl.: G06K 19/06, G07D 7/04, G07D 7/00, D21H 21/48, G11B 5/68

(54) **Substrat comportant un marquage magnétique, procédé de fabrication dudit substrat et dispositif l'utilisant**
Substrat, das eine magnetische Markierung enthält, Verfahren zu dessen Herstellung und Vorrichtung, die es verwendet
Substrate comprising a magnetic marking, method of production of that substrate and device utilizing it

(30) Priorité: 19.05.1999 FR 9906349
(43) Date de publication de la demande: 22.11.2000
(73) Titulaire: Arjo Wiggins Security SAS, 92130 Issy les Moulineaux (FR)
(72) Inventeur: Rancien, Sandrine, 38140 La Murette (FR)
(74) Mandataire: Tanty, François

(56) Documents cités:
- EP-A- 0 353 040
- EP-A- 0 736 840
- EP-A- 0 820 031
- US-A- 5 143 583
- US-A- 5 288 981

## Description

La présente invention concerne un substrat comportant un marquage magnétique. La présente invention concerne également un procédé de fabrication et d'utilisation dudit substrat ainsi qu'un dispositif l'utilisant.

Pouvoir identifier un produit et contrôler son identité dans le circuit industriel et commercial est devenu une exigence pour lutter contre la fraude et améliorer le contrôle de la qualité.

En effet, par exemple, lors de l'affaire dite de la vache folle, il s'est avéré nécessaire de connaître l'origine de la viande et de pouvoir la contrôler dans les circuits de distribution. Un autre exemple est lié aux actes de contrefaçon réalisés pour l'imitation de produits de grandes marques ou de médicaments ou d'autres produits qui aurait de graves conséquences pour la sécurité des personnes ou des biens. Un autre exemple est lié aux actes de diversion mettant les produits authentiques dans des circuits de distributions parallèles aux réseaux de distributions sélectives ou exclusives.

Divers moyens existent pour identifier un objet ou un lot. Le plus courant est d'attribuer un code d'identification, qui associe une chaîne de caractères alphanumériques ou graphiques, éventuellement normalisés, ces informations étant portées par marquage sur une étiquette et/ou directement sur l'objet ou son emballage. L'un des moyens les plus usuels pour réaliser le marquage d'un produit est l'impression par système jet d'encre de codes à barres qui se déclinent sous différentes formes (linéaires, bi- ou tri- dimensionnelles).

Un inconvénient des code à barres est qu'ils requierent des tolérances à l'impression directe difficiles à obtenir avec tout support. Par exemple, si le support d'impression est poreux, il absorbera trop l'encre d'impression et ne permettra pas de réaliser des impressions de petites tailles bien définies, sinon le code sera difficile à lire.

Un autre inconvénient de ces divers codes à barres est leur visibilité; ils peuvent être reconnaissables de façon optique et sont donc violables.

Un autre inconvénient est la place importante qu'ils prennent sur l'objet du fait de leur taille ; il est donc difficile de les appliquer sur un objet de petites dimensions.

Un autre inconvénient est leur manque d'esthétique, ce qui peut s'avérer particulièrement gênant lorsqu'ils sont portés sur des emballages de luxe ou sur des contenants (flacons, bouteilles...), notamment à formes et/ou motifs recherchés.

Un autre moyen de marquage d'un substrat est le marquage magnétique par aimantation de particules magnétiques déposées sur ou inclues dans le substrat. Néanmoins ce moyen souffre d'inconvénients notamment liés à la visibilité des particules magnétiques dans les substrats. On entend ici par « visibilité » qu'il a été impossible de les inclure telles quelles dans la masse ou sur toute la surface des substrats, notamment en papier, sans affecter considérablement les caractéristiques d'aspect de ces derniers.

En effet le magnétisme étant lu ou détecté principalement à l'aide de têtes inductives qui mesurent des variations de flux magnétique, les particules magnétiques doivent être appliquées en couche suffisamment concentrée en particules et épaisse pour générer suffisamment de flux et permettre une bonne lecture. En pratique, l'épaisseur des couches magnétiques est de l'ordre de 10 à 15 µm. Les couches magnétiques, compte-tenu de leur concentration élevée en particules magnétiques, apparaissent très foncées, voire noires et doivent être déposées sous forme de bandes si possible étroites pour former une piste au verso des substrats. Cette piste étant visible, elle est facile à lire, à imiter ou falsifier par des contrefacteurs. De plus lors de l'impression et de la découpe pour la fabrication des substrats, la présence dans une zone étroite et bien localisée des particules magnétiques implique qu'il faut effectuer des repérages en fonction de cette zone qui gêne la lisibilité des impressions et qui ne doit pas être éliminée lors de la découpe.

Pour rendre la piste magnétique moins visible, on peut déposer une couche de masquage soit blanche soit métallique composée de particules réfléchissantes comme l'argent ou l'aluminium, qui cache le noir des pigments magnétiques mais augmente les coûts de fabrication et en outre, conduit à une surépaisseur, ce qui cause notamment des difficultés d'empilement des substrats.

Par ailleurs il a été essayé depuis fort longtemps d'introduire des particules magnétiques en masse dans un papier, lors de sa fabrication. Par exemple dans le brevet DE 805811 de 1948 on a décrit un tel ajout par précipitation entre du chlorure de fer et de l'ammoniaque. On obtient des feuilles à haute teneur en particules, donc de couleur foncée et la méthode est limitée à un type de pigments donnés.

La demande EP 0 820 031 et le brevet US 5 288 981 décrivent des cartes de crédit et d'accès comportant des particules magnétiques uniformément dispersées dans le volume des cartes.

US-A-5 288 981 divulgue que la carte est marquée en ce qu'on définit les points de marquage selon une grille en colonnes et rangées. L'information est enregistrée en ce que ces points de marquage sont sélectivement magnétisés. Ce document divulgue aussi un procédé de décodage magnétique d'un substrat avec les étapes dans lesquelles on détecte la présence ou l'absence de magnétisme aux centres des surfaces de la grille qui est alors converti sous forme d'un signal électrique, on détermine l'état du signal détecté pour chacun des centres de coordonnées respectifs des surfaces de la grille, on détermine la combinaison des centres des surfaces présentant du magnétisme, et on analyse et décode cette combinaison en liaison avec le fichier relatif au système de codification préétabli pour fournir l'information.

Dans la demande de brevet US 5143583 on a incorporé des particules magnétiques dans un papier en faisant imprégner les lumens des fibres de cellulose par une composition magnétique ou un précipité in situ de pigments magnétiques afin d'améliorer la rétention des particules et de ne pas trop affecter les caractéristiques mécaniques. Mais, les taux de particules dans le papier sont supérieurs à 10 % et conduisent à des papiers de couleur foncée.

Il n'a pas été possible jusqu'à ce jour de retenir des pigments magnétiques dans ou sur un substrat, notamment un papier, de les introduire de façon homogène et individualisés sans les agglomérer et de conférer au substrat l'aptitude à être marqué magnétiquement puis détecté sans affecter de manière notable la couleur du papier.

Un problème à résoudre est donc de fournir un substrat comportant un marquage permettant de contrôler un produit, qui soit invisible et difficile à repérer sans connaître à l'avance son emplacement, et offre des possibilités étendues de codage de données et dont le décodage serait aisé.

Un but de la présente invention est de fournir un substrat comportant un marquage permettant de contrôler l'identité d'un produit lié au substrat, ce marquage étant ni détectable à l'oeil nu ni détectable à l'aide d'une loupe magnétique, et sans qu'il soit nécessaire de masquer la zone où ce marquage est présent pour le rendre invisible.

Une autre propriété recherchée en complément au marquage est son inviolabilité c'est-à-dire qu'il ne puisse pas être altéré ou que l'altération puisse être mise en évidence.

Un but lié aux buts de la présente invention énoncés ci-avant est de pouvoir introduire des particules magnétiques de façon homogène et sans agrégats sur une zone étendue à la surface ou dans la masse d'un substrat, notamment en papier.

Par ailleurs, il est préférable que ce substrat soit compatible au moins avec l'un des systèmes d'antivol connus comme les dispositifs électromagnétiques (languette magnétique ou alliage fin), les circuits électroniques détectables à distance par une radio-fréquence ou les dispositifs magnétoacoustiques (entrent en vibration et émetttent une fréquence de 58kHz), c'est-à-dire qu'il ne doit pas perturber la détection, l'activation et la désactivation de ces divers dispositifs.

Une autre propriété secondaire recherchée en complément au marquage est sa compatibilité avec des moyens connus d'authentification (dits éléments de sécurité) dans le domaine des documents de sécurité, comme notamment les dispositifs optiquement variables (hologrammes, iridescence, réseaux de diffraction, moirage, effet thermochrome...).

Un but de la présente invention est donc de fournir un substrat avec un marquage permettant le contrôle d'un produit qui résolve les problèmes des moyens de l'art antérieur et puisse présenter de surcroît les propriétés secondaires recherchées énoncées ci-dessus.

D'autres buts et avantages de la présente invention apparaîtront dans la description des modes de réalisation de l'invention.

La présente invention fournit un substrat selon la revendication 1.

A partir du marquage souhaité, on partitionne une aire du substrat en une grille (2) de façon à déterminer les centres des surfaces à magnétiser et à établir le système de codification, cependant de préférence cette grille n'est pas matérialisée visuellement sur le substrat afin de ne pas être repérée facilement par des falsificateurs. Cette grille peut être sous forme de colonnes et de lignes dont les intersections constituent les surfaces (S₁, S₂, S₃...). La taille minimale de ces surfaces est déterminée en fonction des dimensions des têtes d'écriture qui permettront d'aimanter les particules magnétiques participant au marquage. Cette grille servira par ailleurs à guider le déplacement des têtes d'écriture et aussi des têtes de détection de présence du magnétisme. Cette grille est munie d'un axe des abscisses et d'un axe des ordonnées afin de pouvoir attribuer des coordonnées géométriques aux centres des surfaces (S₁, S₂, S₃...) et de pouvoir constituer des fichiers de données et faire des traitements par logiciels.

Par "substrat", on entend tout substrat comprenant un marquage magnétique grâce aux particules magnétiques selon l'invention et éventuellement d'autres éléments d'identification, d'authentification ou de contrôle supplémentaires. Il peut s'agir en particulier de substrats destinés à la réalisation d'étiquettes ou d'emballages de produits dont des données relatives à leur authenticité et à leur circuit de distribution doivent être contrôlées.
Il peut s'agir encore de documents officiels, comme les passeports, cartes d'identité ou de documents fiduciaires, tickets ou bons de paiement mais aussi de tout document, notamment en papier que l'on souhaite pouvoir contrôler, tels que des billets d'entrée à des manifestations sportives ou culturelles, des tickets de transport.

Par "état" du signal détecté, on entend une valeur donnée d'amplitude du courant à l'intérieur de la magnétorésistance de la tête de détection. Cette valeur d'amplitude varie en fonction du champ magnétique rencontré.

Par « papier », on entend toute feuille de papier ou carton obtenue par voie humide à l'aide d'une suspension de fibres de cellulose naturelles et/ou de fibres synthétiques et pouvant contenir diverses charges minérales et divers additifs, tels que des liants utilisés couramment en papeterie.

En particulier ledit substrat a une épaisseur comprise entre 1 et 2 000 µm, de préférence entre 1 et 800 µm et de préférence encore entre 10 et 600 µm.

Les particules magnétiques peuvent être comprises directement dans le substrat, c'est à dire telles quelles dans la masse ou dans un revêtement à la surface du substrat, ou indirectement dans le substrat, c'est à dire par l'intermédiaire d'un élément de sécurité. Dans ce dernier cas, lesdites particules magnétiques peuvent être comprises dans la masse dudit élément de sécurité ou dans un revêtement appliqué en surface dudit élément de sécurité, ledit élément de sécurité étant lui-même compris en totalité ou en partie dans la masse du substrat ou appliqué en surface de celui-ci.

Par « élément de sécurité », on entend tout élément associé au substrat, notamment en papier, et contribuant à l'authentification du substrat ou rendant sa contrefaçon difficile. Il peut s'agir, notamment, d'un revêtement particulier à la surface du substrat, ou d'un élément compris dans la masse ou appliqué à la surface du substrat, telle qu'une bande en plastique inclue, en totalité ou en partie, dans la masse du substrat, un hologramme appliqué à la surface du substrat, ou sur un autre élément de sécurité.

Par « revêtement à la surface du substrat ou de l'élément de sécurité » on entend qu'il s'agit d'un revêtement qui n'est pas, au moins en partie, recouvert par une couche masquante, ledit revêtement pouvant être présent à la surface externe du substrat ou être situé dessous ou entre d'autres couches qui elles-mêmes ne masquent pas directement ledit revêtement, au moins en partie.

De même par la caractéristique selon laquelle « les particules magnétiques n'affectent pas les caractéristiques d'aspect de ladite zone » on entend qu'il n'est pas nécessaire de masquer ladite zone pour les rendre invisibles. Plus précisément, la caractéristique selon laquelle, des « particules magnétiques n'affectent pas les caractéristiques d'aspect de la zone » signifie que lorsqu'elles sont comprises dans la masse du substrat, ou comprises à l'intérieur d'un élément de sécurité, lui-même compris, en totalité ou en partie, dans la masse du substrat, ou encore lorsqu'elles sont inclues dans un revêtement à la surface du substrat, ou dudit élément de sécurité, on ne discerne pas les particules en tant que telles et l'aspect, notamment la luminosité (L*) et/ou les coordonnées colorimétriques (L*, a*, b*) dans le système CIELAB,et/ou l'opacité du substrat, et/ou de l'élément de sécurité ne sont pas ou très peu modifiées.

Plus particulièrement, l'écart de couleur Delta E* dans la formule CIELAB entre un substrat témoin sans particules magnétiques et un même substrat se distinguant uniquement par la présence de particules magnétiques selon la présente invention, est inférieur à 10. Plus généralement, l'écart de couleur Delta E* dans la formule CIELAB entre une dite zone comprenant lesdites particules magnétiques et une zone s'en distinguant par l'absence de particules magnétiques, est inférieure à 10.

En particulier, lorsque le substrat ou le revêtement comprenant lesdites particules magnétiques est de couleur claire à blanc, la luminosité L* est supérieure à 70 et de préférence à 80.

Plus particulièrement encore, lorsque le substrat ou le revêtement comprenant lesdites particules magnétiques est de couleur claire à blanche, sa blancheur ISO selon la norme ISO 2471 (réflectance à 457 nm) est supérieure ou égale à 60% et/ou sa blancheur CIE selon la formule CIELAB est supérieure ou égale à 20 %, sous illuminant D65 sans UV et sous un angle d'observation de 10°.

Des charges apportant de la blancheur, connues dans le domaine papetier comme par exemple le dioxyde de titane ou le carbonate de calcium, peuvent être ajoutées pour améliorer la blancheur, en particulier à des taux compris entre 2 et 10 %.

Lorsque le substrat, l'élément de sécurité ou le revêtement à la surface du substrat ou de l'élément de sécurité sont transparents ou translucides, leur opacité n'est pas substantiellement modifiée de sorte que la transparence est conservée.

De plus l'invention permet d'associer dans la même zone un marquage magnétique avec un élément de sécurité ou d'identification tel que notamment un élément d'identification à effet visuel, en particulier un élément comportant des inscriptions destinées à être vues, sans que la présence des particules magnétiques participant au marquage n'occulte l'effet visuel recherché avec ledit élément de sécurité, notamment ledit élément d'identification à effet visuel.

Selon la présente invention, le marquage magnétique peut donc être associé aux éléments de sécurité ou d'identification connus, et/ou sur des zones étendues desdits substrats.

Ces substrats comportent un marquage magnétique qui peut être fait selon un grand nombre de combinaisons de surfaces magnétisées car on peut utiliser toute l'étendue du substrat et de plus ce marquage est invisible à l'oeil nu et invisible à la loupe magnétique.

Selon la présente invention, la détection de présence magnétique du marquage se fait à l'aide de têtes dotées de capteurs magnéto-résistifs lesquelles ont une sensibilité très supérieure aux têtes inductives utilisées antérieurement ; on peut donc caractériser l'aimantation à saturation ou rémanente des particules magnétiques avec des concentrations en particules très faibles. Toutefois, selon une caractéristique de l'invention liée à la sensibilité des têtes magnéto-résistives, il est nécessaire que les particules magnétiques ne forment pas d'agglomérats ou d'agrégats inhomogènes. Il est donc nécessaire que des particules magnétiques soient bien individualisées et uniformément dispersées et réparties dans leur substrat. On entend donc par « répartition uniforme des particules magnétiques », que la densité volumique en particules dans ladite zone, c'est à dire dans la masse du substrat ou dudit élément de sécurité ou dans le revêtement à la surface dudit substrat ou dudit élément de sécurité dans ladite zone, et donc l'aimantation magnétique à saturation ou rémanente dans ladite zone sont sensiblement constantes de sorte qu'il n'y ait pas ou peu de bruit de fond. Cette caractéristique est nécessaire pour permettre de détecter le marquage enregistré dans ladite zone et de le décoder ultérieurement de façon fiable.

Pour ce faire, on réalise avantageusement un substrat convenant à la présente invention en utilisant une dispersion des particules magnétiques dans laquelle on obtient une bonne individualisation des particules, ce qui permet de prévenir une réagglomérisation desdites particules. Les particules sont sous forme de particules pouvant être enrobées d'une couche, même discrète (c'est à dire non continue) provenant du milieu de dispersion. Lorsque l'on incorpore cette dispersion de particules dans le milieu de fabrication dudit substrat ou dudit élément de sécurité ou dudit revêtement à la surface du substrat ou dudit élément de sécurité, qui doit les contenir, on conserve les particules sous forme individualisées sans réagglomération et elles sont réparties de façon homogène dans ledit substrat ou ledit élément de sécurité ou ledit revêtement et ce même en introduisant lesdites particules à de très faibles taux.

La dispersion comprend un agent tensio-actif mouillant et dispersant pour permettre l'individualisation des particules et la redispersion de cette dispersion dans le milieu final d'incorporation. Les particules sont stabilisées contre la sédimentation en incorporant avantageusement un agent de contrôle de la rhéologie si nécessaire.
Cette façon d'incorporer la dispersion est particulièrement avantageuse lorsque l'on incorpore la dispersion à un milieu liquide et à des taux de dilution très élevés et de surcroît sous forte agitation car on pourrait craindre une réagglomérisation par un "lessivage" des particules, c'est-à-dire par destruction de la couche protectrice et stabilisante qui s'est formée autour des particules individualisées. Ceci est donc avantageux lorsque l'on incorpore la dispersion de particules magnétiques à une suspension de fibres de cellulose pour la fabrication d'un substrat consistant en une feuille de papier laquelle se fait toujours en milieu dilué. De plus, on choisit la forme et la taille des particules magnétiques comme il sera explicité ci-après.

Un procédé de fabrication dudit substrat convenant à l'invention concerne un procédé d'incorporation desdites particules magnétiques dans la masse du substrat ou dudit élément de sécurité ou dans un dit revêtement à la surface dudit substrat ou dudit élément de sécurité dans ladite zone.

Lesdites particules présentent une dimension et une concentration telles qu'elles n'affectent pas les caractéristiques d'aspect de ladite zone et permettent une répartition uniforme des particules dans ladite zone comme mentionné précédemment.

Plus particulièrement, on mélange une dispersion de particules magnétiques avec le matériau de base du substrat ou d'un revêtement appliqué à la surface du substrat.

Dans un mode de réalisation avantageux, une dispersion stabilisée de particules magnétiques est obtenue en effectuant les étapes suivantes :
1) On mélange les particules magnétiques à une solution d'un agent tensioactif à la fois mouillant et dispersant et éventuellement d'une résine de broyage dans un milieu compatible avec le milieu de fabrication avec lequel la dispersion sera mélangée ultérieurement, de façon à obtenir une pâte de broyage à haute teneur en particules magnétiques,
2) On broie ladite pâte de broyage obtenue à l'étape 1) notamment de façon à obtenir des particules individualisées de taille inférieure à 2 µ, de préférence inférieure à 1 µ,
3) On dilue la pâte broyée de l'étape 2) dans une solution de façon à obtenir une dispersion dont la teneur en particules magnétiques est appropriée en fonction du milieu de fabrication avec lequel elle sera mélangée. Dans un mode de réalisation, la teneur en particules dans ladite dispersion est de 1 à 40 % en particules, particulièrement de 5 à 15 % de particules magnétiques, en poids sec. Eventuellement ladite solution contient un agent modificateur de rhéologie de manière à empêcher la sédimentation des particules au stockage.

Les particules magnétiques peuvent donc être incorporées avantageusement dans la masse d'un papier en mélangeant une dispersion aqueuse desdites particules avec le mélange de fibres, notamment cellulosiques ou de coton et des adjuvants papetiers classiques pour la réalisation de la feuille de papier.

Dans un mode de réalisation, on mélange une dispersion de particules magnétiques en milieu organique avec le mélange de base devant servir à la fabrication dudit substrat consistant en une feuille de plastique. Les feuilles de plastique peuvent être notamment à base d'une polyoléfine telle que polyéthylène ou polypropylène ou leurs copolymères, et comporter des charges pigmentaires, des agents anti-statiques. Elles peuvent être obtenues par extrusion ou par injection. Les feuilles peuvent être étirées.

Ladite zone comprenant lesdites particules peut concerner la totalité du substrat ou une partie seulement. De préférence, elle concerne toute l'étendue du substrat afin que le nombre de combinaisons du marquage soit élevée et que cette zone soit le plus difficilement repérable par des personnes non averties.

L'incorporation directe des particules magnétiques dans la masse du substrat, ou dans un revêtement à la surface du substrat dans une zone recouvrant la totalité du substrat, permet d'étendre considérablement les possibilités de marquage du substrat de la présente invention. Toutefois, lorsque les particules magnétiques sont comprises directement dans la masse du substrat, ou dans un revêtement à la surface du substrat, elles peuvent l'être dans une zone localisée, notamment sous forme d'une bande, notamment d'une largeur de 1 à 10 cm et d'une hauteur de mêmes dimensions par des procédés connus de l'homme de l'art, ladite zone ne recouvrant pas nécessairement la totalité du substrat.

La présente invention est particulièrement avantageuse lorsque le substrat comprenant lesdites particules magnétiques est un substrat, notamment en papier, de couleur claire, notamment blanche, crème ou jaune pâle. Dans ce cas, comme mentionné précédemment, la luminosité L* du système CIELAB est supérieure à 70 et de préférence à 80. La blancheur ISO selon la norme ISO 2471 est de préférence supérieure ou égale à 60% et la blancheur CIE selon la formule CIELAB est de préférence supérieure ou égale à 20%, mesurées sous illuminant D65 sans UV sous un angle d'observation de 10°.

Lorsque les particules magnétiques sont comprises dans un revêtement à la surface du substrat, ou à la surface d'un élément de sécurité, ce revêtement peut être constitué par une encre ou un vernis ou encore une composition de couchage ou d'encollage, qui peut être appliqué(e) respectivement par impression ou couchage papetier. La composition de couchage peut comporter notamment, outre lesdites particules magnétiques, un liant du type polyalcool de vinyle (PVA), amidon ou polymère en dispersion aqueuse (latex), des charges de couchage, de l'eau et des additifs. Le vernis peut comporter notamment, outre lesdites particules magnétiques, un liant polymère, un solvant et des additifs.

La composition de couchage peut être appliquée par les moyens connus de l'homme de l'art avec des installations de couchage, telles que presse-encolleuse, coucheuse à lame métallique, coucheuse à lame d'air, coucheuse à barre rotative type CHAMPION, coucheuse à transfert de film prédosé.

Comme encres ou vernis, on cite plus particulièrement les encres ou vernis d'impression qui peuvent être appliqués par héliogravure, impression taille-douce, impression offset ou sérigraphie sur une épaisseur de 1 à 5 µm. Dans les vernis d'impression, on peut citer les vernis solubles en milieu aqueux ou en milieu solvant organique qui sont séchés par évaporation, et les vernis fixés par rayonnement UV ou électronique (« electron beam »).

Le revêtement de surface comprenant des particules magnétiques peut également être constitué d'une composition adhésive appliquée à la surface du substrat, notamment en papier ou d'un élément de sécurité, en particulier, un vernis thermoscellant facilitant la tenue dudit élément de sécurité dans la masse du substrat, notamment en papier.

Le revêtement à la surface du substrat, notamment en papier, peut également être constitué par un film plastique dans la masse duquel sont incorporées les particules magnétiques, notamment un film d'épaisseur de 10 à 500 µm.

Lorsque lesdites particules sont comprises dans un revêtement à la surface du substrat, notamment en papier ou d'un élément de sécurité, ledit revêtement peut être avantageusement transparent ou translucide.

Pour satisfaire à la fois aux caractéristiques d'aspect du substrat, notamment aux valeurs de blancheur ISO et CIE mentionnées précédemment, et aux caractéristiques de répartition uniforme des particules magnétiques, et pour permettre une détection du marquage par présence magnétique, il est avantageux que lesdites particules vérifient les caractéristiques de concentration et de taille suivantes, prises séparément ou en combinaison :
a) lorsque les particules sont comprises dans la masse dudit substrat, leur concentration est de 0,02 % à 0,07 % en poids sec par rapport au poids dudit substrat dans ladite zone,
b) lorsque lesdites particules sont comprises dans un revêtement appliqué en surface dudit substrat, ou d'un dit élément de sécurité, la quantité de particules magnétiques déposée dans ladite zone est de 5 à 50 mg/m²
c) les particules magnétiques ont une taille inférieure ou égale à 2 µm, de préférence inférieure à 1 µm, notamment de 0,1 à à µm, plus particulièrement encore de 0,1 à 0,3 µm. Par « taille », on entend ici la plus grande dimension de la particule.

Pour des concentrations dans la masse du substrat, inférieures à 0,01% et/ou pour des quantités inférieures à 5 mg/m² pour un revêtement à la surface du substrat ou à la surface d'unélément de sécurité, le marquage et sa détection deviennent difficiles. Pour un papier blanc, un bon compromis entre un écart de couleur delta E* minimum et un signal optimum dans les conditions d'enregistrement et de lecture des données, est obtenu avec des concentrations de particules de 0,02 % à 0,07 % dans la masse du substrat et 5 à 50 mg/m² dans un revêtement à la surface du substrat ou d'un élément de sécurité comme mentionné ci-dessus.

Lorsque les particules sont comprises dans la masse d'un élément de sécurité, elles sont considérées comme étant comprises dans la masse dudit substrat et les concentrations de particules magnétiques sont celles indiquées ci-dessus lorsque les particules sont comprises dans la masse dudit substrat.

Selon la présente invention, il est possible d'appliquer sur une bande, des couches magnétiques transparentes d'épaisseur de 1 à 5 µm, permettant un marquage magnétique et sa détection.

Les particules peuvent être incorporées au substrat par dépôt d'une couche magnétique spécifique ou simplement par mélange à des couches participant à la réalisation du substrat, telles que la couche d'un vernis protecteur, la couche d'un vernis thermoscellant, ou encore incorporées dans la masse par exemple d'un élément de sécurité qui sera introduit ou apposé sur le substrat.

Les substrats, notamment les emballages de luxe, peuvent comporter avantageusement des hologrammes car ces hologrammes participent à l'authentification du produit tout en étant esthétiques, et sont plus facilement reconnaissables par le grand public. Toutefois, ces hologrammes dans les réalisations antérieures ne pouvaient pas être aisément associés à un marquage magnétique pour les raisons suivantes. Tout d'abord, les hologrammes individuels ou sous forme de bandes holographiques sont, eux-mêmes, constitués de complexes multicouches, à savoir :
1) pour les hologrammes individuels : couche adhésive, laque d'embossage, aluminium et vernis de protection ;
2) pour les bandes holographiques : les mêmes couches que pour les hologrammes mais appliquées sur au moins un film de polyester, ladite bande étant revêtue sur ses faces externes de vernis thermoscellant.

Ensuite, pour avoir des propriétés magnétiques, il fallait appliquer une couche magnétique dans ces complexes par une opération supplémentaire, la couche étant de surcroît sombre et épaisse. En outre, les hologrammes sont parfois des hologrammes transparents, c'est à dire non métallisés ou des hologrammes partiellement démétallisés. Or, la présence d'une couche magnétique sombre est d'une part incompatible avec les propriétés de transparence de l'hologramme et d'autre part, résiste au traitement de démétallisation partielle de l'hologramme, rendant impossible la réalisation d'une inscription avec des évidements de type dit « Cleartext ».

La présente invention permet d'associer un marquage magnétique à des hologrammes de façon avantageuse. Il suffit, pour ce faire, de mélanger les particules magnétiques aux couches composant l'hologramme, telles que une couche adhésive, une laque d'embossage, un vernis de protection ou dans un « primer » d'adhérence et de réaliser le marquage comme décrit. Ce « primer » d'adhérence est appliqué sur la surface du support sur lequel l'hologramme sera collé afin de favoriser son adhésion.

Pour une bande holographique, on peut aussi incorporer lesdites particules magnétiques dans la masse d'un substrat polyester formant ladite bande ou dans le vernis thermoscellant, permettant l'adhésion de ladite bande dans la masse du substrat , notamment en papier. La présente invention fournit en particulier des hologrammes transparents ou partiellement démétallisés, comprenant un marquage magnétique.

Un avantage supplémentaire des bandes holographiques est d'obtenir un hologramme à propriété magnétique sans affecter les procédés de fabrication traditionnels et sans augmenter son épaisseur de façon excessive.

Dans une variante de réalisation de l'invention, les particules magnétiques participant au marquage magnétique sont inclues dans un film. Cette variante permet de réaliser des films en plastique, notamment des films d'emballages, des étiquettes ou des films de protection avec un marquage magnétique dans la masse du film.

Cette variante est également adaptée pour réaliser des passeports ou cartes d'identité ou autres documents qui sont recouverts d'un film de protection des mentions variables portées sur le document. En général le film de protection est un complexe d'un film plastique transparent, d'encres de sécurité (fluorescente, iridescente, etc ...) et d'un adhésif.

Selon la présente invention, on peut faire un marquage magnétique qui correspond par exemple au pays donnant la nationalité du détenteur du passeport ou de la carte d'identité, ceci dans la masse même du film de protection, sans que ce marquage ne soit visible ou ne perturbe une mise en page normalisée, la page entière pouvant servir de support au marquage.

Selon une autre variante de réalisation de la présente invention, les particules magnétiques participant au marquage sont comprises dans l'adhésif du film de protection. Les avantages de cette variante, en plus de ceux cités précédemment pour le film plastique transparent, sont que l'adhésif constitue un support d'enregistrement malléable et ductile à chaud relativement plus fragile qu'un film. Ainsi si l'adhésif est constitué par l'adhésif du film de protection du passeport, toute tentative de soulèvement du film altère l'adhésif et détruit le marquage magnétique enregistré, ce qui constitue une sécurité supplémentaire.

La présente invention permet également de réaliser des substrats consistant en une feuille d'emballage ou une feuille de papier destinée à la fabrication d'une feuille d'emballage, lesdites particules magnétiques étant incorporées dans la masse du substrat constituant ladite feuille ou dans un revêtement appliqué à la surface dudit substrat.

La présente invention permet également de réaliser des étiquettes, notamment en papier, particulièrement avantageuses. Les particules magnétiques peuvent être incorporées dans la masse du substrat ou dans un revêtement appliqué à la surface du substrat sur le recto de l'étiquette, notamment dans un revêtement de type vernis transparent, ou sur le verso, notamment dans un adhésif appliqué à la surface dudit substrat à son verso. Dans tous les cas, le marquage magnétique n'est jamais visible et ce même au verso à travers un support transparent sur lequel l'étiquette est appliquée comme une bouteille, en particulier, lorsqu'il s'agit d'une étiquette d'une bouteille de vin ou d'un flacon de parfum.

Il est important que ce marquage magnétique ne puisse pas être effacé involontairement. Pour éviter cet effacement, on réalise le marquage en utilisant des particules magnétiques obtenues à partir de matériaux dits de haute coercitivité, c'est-à-dire qui ont une coercitivité supérieure ou égale à 135.10³ A/m (environ 1700 Oe) et de préférence supérieure ou égale à 218.10³ A/m (environ 2700 Oe). Cette coercitivité est en général inférieure 800.10³ A/m (environ 10 000 Oe). Parmi ces matériaux on utilise en général les ferrites de baryum ou de strontium et en particulier respectivement BaFe₁₂ O₁₉ ou SrFe₁₂ O₁₉ sont couramment utilisées.

La présente invention est particulièrement avantageuse lorsque ledit support est une étiquette ou une feuille d'emballage ou un film d'emballage.

Par ailleurs, l'invention permet d'associer dans la même zone un marquage invisible magnétique et un élément d'authentification comme ceux connus dans le domaine des documents de sécurité, notamment à effet visuel, comme certains fils de sécurité, les dispositifs à effet optique variable comme les réseaux de diffraction, les hologrammes, les moirages, les impressions ou bandes à effet iridescent, les impressions à base d'encres thermochromes ou autres. L'effet visuel ou la lisibilité n'est pas occultée par la présence des particules magnétiques.

Selon la présente invention, les particules magnétiques peuvent donc être associées à des éléments d'authentification ou de sécurité.

De même les dispositifs anti-vol peuvent coexister avec la présence du marquage obtenu avec les particules magnétiques.

Un tel support est donc inviolable car les zones contenant le marquage ne peuvent pas être repérées aisément.

Selon la présente invention, le mélange des particules magnétiques dans la masse du substrat ou à un revêtement transparent à translucide permet de les répartir de façon uniforme sur toute la surface du support et de les superposer à des inscriptions ou motifs, en négatif ou en positif, sans altérer leur visibilité et aspect.

La présente invention fournit en particulier un substrat caractérisé par le fait que les particules magnétiques ont une coercitivité supérieure ou égale à 135.10³ A/m, de préférence supérieure ou égale à 218.10³ A/m.

La présente invention fournit en particulier un substrat caractérisé par le fait que les particules magnétiques ont une taille moyenne inférieure à 2 µm, de préférence comprise entre 0,1 et 1 µm, de préférence encore entre 0,1 et 0,5 µm.

La présente invention fournit en particulier un substrat caractérisé par le fait que ledit substrat est une feuille comportant des fibres de cellulose.

La présente invention fournit en particulier un substrat caractérisé en ce qu'il s'agit d'une feuille d'une épaisseur comprise entre 1 et 2 000 µm.

La présente invention fournit en particulier un substrat caractérisé en ce qu'il s'agit d'une feuille d'une épaisseur comprise entre 1 et 800 µm, de préférence entre 10 et 600 µm.

La présente invention fournit en particulier un substrat caractérisé en ce que lesdites particules magnétiques sont comprises dans ledit revêtement à la surface du substrat, ledit revêtement consistant en un adhésif.

La présente invention fournit en particulier un substrat caractérisé en ce que lesdites particules sont comprises dans un dit revêtement à la surface du substrat, ledit revêtement consistant en une composition de couchage.

La présente invention fournit en particulier un substrat caractérisé en ce que les particules magnétiques sont comprises dans un revêtement appliqué sur un hologramme ou dans une couche constitutive d'un hologramme.

La présente invention fournit en particulier un substrat caractérisé en ce que ledit hologramme est un hologramme transparent ou hologramme partiellement démétallisé.

La présente invention fournit en particulier un substrat caractérisé par le fait que ledit substrat a une couleur claire, notamment blanche, crème ou jaune pâle.

La présente invention fournit en particulier un substrat caractérisé par le fait que la zone dudit substrat ou d'un dit revêtement comportant lesdites particules, a une luminosité L* selon le système CIELAB supérieure à 70 et de préférence à 80.

La présente invention fournit en particulier un substrat caractérisé par le fait que la zone dudit substrat ou d'un dit revêtement comportant lesdites particules, a une blancheur ISO selon la norme ISO 2471 supérieure ou égale à 60% sous illuminant D65 sans UV sous un angle d'observation de 10°.

La présente invention fournit en particulier un substrat caractérisé par le fait que la zone du substrat comportant lesdites particules a une blancheur CIE selon la formule CIELAB du substrat est supérieure ou égale à 20% sous illuminant D65 sans UV sous un angle d'observation de 10°.

La présente invention fournit en particulier un substrat caractérisé en ce que ledit substrat ou ledit revêtement à la surface du substrat est transparent ou translucide.

La présente invention fournit en particulier un substrat caractérisé par le fait qu'il a un grammage supérieur ou égal à 200 g/m².

La présente invention fournit en particulier un substrat caractérisé par le fait que ledit substrat est un emballage.

La présente invention fournit en particulier un substrat caractérisé par le fait que ledit substrat est une étiquette.

La présente invention fournit en particulier un substrat caractérisé par le fait que la zone comportant lesdites particules magnétiques représente toute l'étendue du substrat.

La présente invention concerne aussi un procédé de réalisation d'un substrat selon la revendication 27.

Le procédé peut être caractérisé en ce :
- qu'on détecte la présence ou l'absence de magnétisme aux centres des surfaces (S₁, S₂, S₃...) qui est alors converti sous forme d'un signal électrique,
- qu'on détermine l'état du signal détecté pour chacun des centres de coordonnées (Xₙ, Yₚ) respectifs des surfaces (S₁, S₂, S₃...) de ladite grille,
- qu'on détermine la combinaison desdits centres des surfaces présentant du magnétime,
- qu'on analyse et décode cette combinaison en liaison avec le fichier (F) relatif au système de codification préétabli pour fournir l'information recherchée.

La présente invention fournit en particulier un procédé caractérisé par le fait que le marquage est réalisé à l'aide d'au moins une tête d'écriture inductive et que la détection de présence ou d'absence de magnétisme est réalisée à l'aide d'au moins une tête magnétorésistive.

La présente invention fournit en particulier un procédé caractérisé par le fait la /les tête(s) d'écriture et que la/les tête(s) de détection sont pilotées par système doté d'un logiciel permettant de parcourir la totalité de la grille (2).

La présente invention fournit en particulier un procédé caractérisé par le fait que ladite information à marquer est analysée selon une même grille que la grille(2) par un logiciel d'analyse d'image.

La présente invention fournit en particulier un procédé caractérisé par le fait que l'information décodée est reconstruite visuellement à l'aide d'un logiciel de reconstitution d'image.

La présente invention concerne aussi un dispositif permettant le marquage magnétique d'une information, telle qu'une information alphanumérique ou graphique relative à un produit, sur un substrat (1) et le décodage dudit marquage dudit substrat selon la revendication 35 ou 36.

La présente invention fournit en particulier un dispositif caractérisé par le fait qu'il comporte un moyen qui traduit ladite information reconstituée sous forme vocale.

La présente invention fournit en particulier un dispositif caractérisé par le fait que la/les têtes d'écriture magnétique est/sont de type inductif.

La présente invention fournit en particulier un dispositif caractérisé par le fait que la/les têtes de détection du moyen de détection magnétique est/sont de type magnétorésistif.

La présente invention fournit en particulier un dispositif caractérisé par le fait que le moyen d'écriture est choisi parmi les moyens comportant une ou plusieurs têtes mobiles, les moyens comportant des têtes fixes en un nombre égal à celui du nombre de surfaces (S1, S2, S3,...) constituant la grille.

La présente invention fournit en particulier un dispositif caractérisé par le fait que le moyen de détection est choisi parmi les moyens comportant une ou plusieurs têtes mobiles, les moyens comportant des têtes fixes en un nombre égal à celui du nombre de surfaces (S1, S2, S3, ...) constituant la grille.

La présente invention fournit en particulier un dispositif caractérisé par le fait que le moyen d'écriture est relié à un système de pilotage doté d'un logiciel générant les coordonnées (Xₙ, Yₚ) respectives des centres des surfaces à aimanter en liaison avec le système de codification préétabli.

La présente invention fournit en particulier un dispositif caractérisé par le fait que le moyen de détection est relié à:
- un système de pilotage doté d'un logiciel permettant que la/les têtes de détection parcourent la totalité de la grille (2),
- un système d'analyse du signal lu par les têtes de détection,
- un logiciel permettant de déterminer les coordonnées des centres des surfaces magnétisés permettant d'établir la combinaison du marquage magnétique,
- un logiciel permettant de traduire cette combinaison en ladite information, en liaison avec le fichier (F) relatif au système de codification préétabli.

D'autres buts, caractéristiques et avantages de la présente invention apparaîtront à la lumière des exemples qui vont suivre.

### EXEMPLES :

### Exemple 1 :

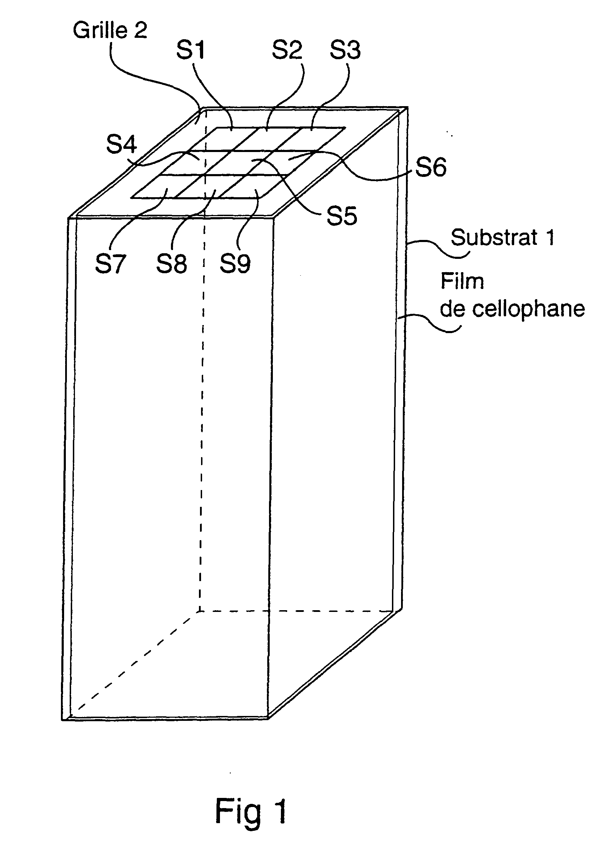

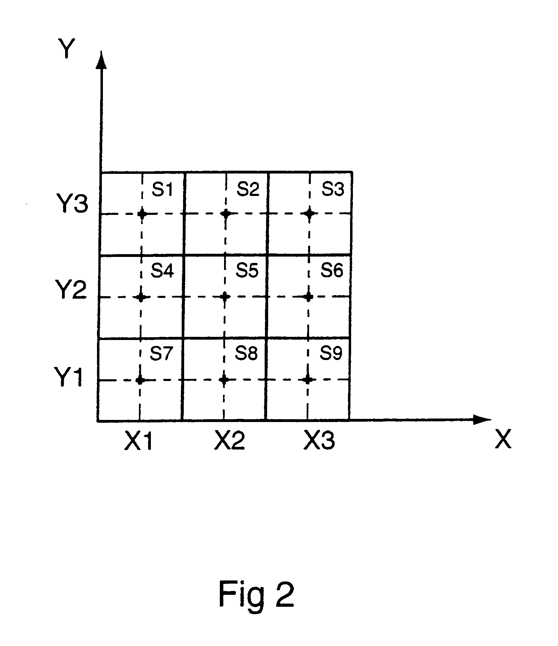

Les figures 1, 2 et 3 sont en liaison avec l'exemple 1.
1/ Sur une machine à papier pilote, on fabrique un papier avec 0,06% en poids sec de particules magnétiques de haute coercitivité réparties uniformément dans la masse du papier comme suit.
Dans 300 litres d'eau, on met en suspension 2 kg de fibres de cellulose comprenant 60% de fibres longues et 40% de fibres courtes. On raffine cette suspension à environ 40 degrés Schoepper-Riegler. Ensuite on ajoute 10 % en poids (par rapport au poids des fibres) de kaolin come charges minérales et des colorants à base d'oxydes ferriques conférant au substrat une couleur crème spécifique. Puis on ajoute une dispersion aqueuse de particules magnétiques au cuvier de mélange. On ajoute un agent de collage cationique ( 0,8% en poids sec d'une colophane) et un agent de rétention cationique [0,6% en poids sec d'un amidon cationique]; les pourcentages étant exprimés par rapport aux fibres de cellulose. On redilue en caisse de tête de la machine ; le taux de dilution du mélange est de 3,6g/l d'où, pour 0,06 % de particules introduites en poids sec, le taux de dilution des particules magnétiques est d'environ 2mg/l (donc de l'ordre du ppm).
Les particules magnétiques sont des ferrites de barium et ont une coercitivité de 218,84 x 10³ A/m (2750 Oe) ; la plus grande dimension des particules est inférieure à environ 1 µm.

La dispersion aqueuse de particules magnétiques a été obtenue de la façon qui suit. Une poudre de ferrites de barium est ajoutée sous agitation à une solution aqueuse d'un agent tensio-actif, à la fois mouillant et dispersant, tel qu'un sel d'ammonium de poly(acide acrylique) et éventuellement une résine de broyage telle que du PVA qui a une bonne compatibilité avec le milieu auquel elle sera incorporée ultérieurement, à savoir la suspension fibreuse. Une pâte à haute teneur en particules est obtenue, appelée pâte de broyage, qui est ensuite broyée dans un moulin à billes de type horizontal pour détruire les agglomérats et individualiser les particules de manière à obtenir des particules de taille inférieure à 1 µm. Le concentré de particules magnétisables individualisées est ensuite redilué et stabilisé contre la sédimentation par ajout d'un agent modificateur de rhéologie, comme par exemple un gel aqueux de bentonites ou de silices pyrogènées.
La dispersion obtenue contient 10 % de particules magnétiques en poids sec.

On traite, comme usuellement, la surface du papier obtenu en presse encolleuse par une solution d'amidon et d'un insolubilisant de l'amidon, une résine mélamine-formaldéhyde, dans le but d'améliorer leur imprimabilité.
La luminosité L* est de 85,7, a* est de 2,10 et b* est de 8,60. L'écart de couleur par rapport au témoin sans particules magnétiques est de 7,5.
Les mesures des caractéristiques colorimétriques et de blancheur pour définir l'aspect du papier ont été réalisées sur un spectrocolorimètre ELREPHO 2000 dans le système CIE sous illuminant D65 (lumière du jour et sans UV) et sous un angle d'observation de 10 degrés, les feuilles étant superposées en nombre suffisant pour avoir une épaisseur donnant l'opacité requise.
Les coordonnées colorimétriques L*, a*, b* dans le système CIELAB ont été mesurées et à partir de celles-ci on a calculé l'écart de couleur Delta E* entre l'échantillon témoin (sans particules magnétiques) et l'échantillon avec particules magnétiques, selon la formule suivante :
Delta E* = racine carrée [(L*₀-L*ᵢ)² + (a*₀-a*ᵢ)² + (b*₀-b*ᵢ)²]
L*₀, a*₀, b*₀ étant les coordonées CIELAB du témoin,
L*₁, a*ᵢ, b*, étant les coordonées CIELAB de l'échantillon i.

On détermine aussi la blancheur CIE selon la formule CIELAB; elle est de 22,3.
On détermine aussi la blancheur ISO selon la norme ISO 2471 (réflectance à 457 nm). Elle est de 57,5 car le papier a été fabriqué de façon à être de couleur crème.
Le papier a un grammage de 320 g/m²; ce grammage est mesuré selon la norme ISO 536 après conditionnement selon la norme ISO 187.
2/ A partir de ce substrat, on fabrique un étui pour emballer par exemple un flacon de parfum. 3/ On imprime sur cet étui, un code à barres visible et/ou fluorescent, unitaire c'est-à-dire caractéristique de l'étui. Ce code à barres contient comme information un numéro de référence lié au contenu de l'étui. Ce numéro et le descriptif du contenu correspondant sont stockés dans le fichier d'une base de données sur un ordinateur.
4/ Cet étui est recouvert d'un film de cellophane de protection. Ce film a une épaisseur de 30 µm.
5/ Les étuis contenant les flacons de parfum sont mis en cartons et les cartons stockés en palette.
6/ Au moment de l'expédition, on ouvre les cartons pour porter sur le dessus visible des étuis des informations telles que notamment les données liées à la destination des produits (pays de destination).

Pour procéder au marquage magnétique, on partitionne une aire de la surface visible de l'étui en réalisant une grille (2), non matérialisée visuellement sur le substrat, qui fait 3cm sur 3cm de côté et est divisée en neuf carrés de surfaces égales (S₁, S₂, S₃, S₄, S₅, S₆, S₇, S₈, S₉).
La figure 1 représente un schéma simplifié de l'étui entouré d'un film de cellophane sur lequel on a procédé à la réalisation de la grille (2) sur la face supérieure de l'étui. Chaque surface a un centre de coordonnées (Xn, Yp) selon les axes d'abscisses X et d'ordonnées Y de la grille (2).
La figure 2 représente une vue grossie deux fois de la grille (2) avec les différents centres des surfaces (S₁, S₂, S₃, S₄, S₅, S₆, S₇, S₈, S₉).

On marque sur l'étui le pays de destination donné, par exemple le Japon, en ne magnétisant que certains centres de ces neufs surfaces. Auparavent, on décide que les trois surfaces (S₁, S₃, S₇) de coordonnées respectives (X1, Y3), (X3, Y3) et (X1, Y1) qui présenteront du magnétisme correspondent au code du Japon. La correspondance entre les coordonnées centrées des surfaces (S₁, S₃, S₇) et le nom du pays Japon est stockée dans le fichier (F) d'une base de données sur un ordinateur.

On magnétise les trois centres respectifs des surfaces (S₁, S₃, S₇) grâce à un système d'écriture multi-tête, en l'occurrence ici de neuf têtes, pilotées par un logiciel d'automatisme qui positionne le système juste au-dessus de la partie accessible de l'étui (2) au niveau de la grille qui est repérée par un système optique par rapport à l'angle avant droit de l'étui. Les coordonnées des centres des surfaces à magnétiser sont générées à partir du fichier (F) et déterminent quelles têtes d'écriture magnétique doivent être activées. Un courant est alors appliqué dans les têtes positionnées sur les centres des surfaces à magnétiser (S₁, S₃, S₇) de façon à aimanter les particule magnétiques contenues dans le papier pour réaliser le marquage.

Les têtes d'écriture sont des têtes inductives qui ont une longueur d'entrefer de 100 µm et une largeur de 6 mm, le magnétisme est généré par les têtes avec une induction à saturation d'environ 2 Teslas.

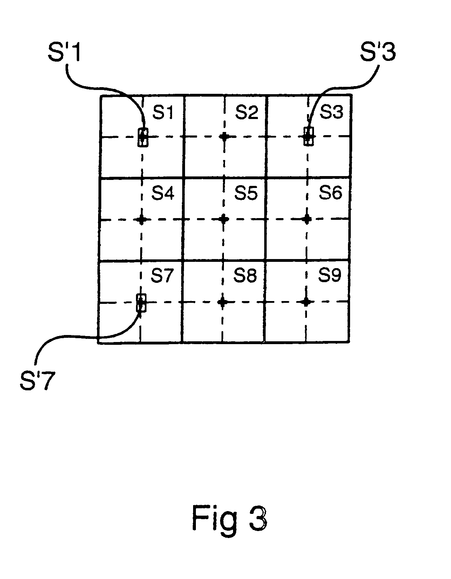

Les surfaces réellement magnétisées (S'₁, S'₃, S'₇) sont centrées sur les centres des surfaces (S₁, S₃, S₇) et ont la forme d'un rectangle ayant la taille des têtes d'écriture , c'est-à-dire faisant 6 mm de haut et 100 µm de large et sont présentes en fait sur une profondeur de 75 µm dans le papier selon les lignes du champ magnétique d'écriture. La figure 3 représente un schéma de la grille (2) grossie deux fois avec l'indication des surfaces magnétisées (S'₁, S'₃, S'₇) autour des centres respectifs des surfaces (S₁, S₃, S₇).
7/ De la même façon, on procède au marquage de chaque étui du carton grâce à un logiciel qui pilote pas à pas le système d'écriture multitête.
8/ On détecte la présence du magnétisme par un système de lecture à neuf têtes magnétorésistives qui se positionnent comme précédemment en repérant l'angle avant droit de l'étui, les neufs têtes étant actives. Ces têtes traduisent le magnétisme détecté en un signal électrique.
9/ Les coordonnées (Xn, Yp). des centres respectifs des surfaces pour lesquels les têtes de lecture ont détecté une aimantation sont ensuite traitées par un algorithme permettant d'établir leur cartographie d'après la grille (2). A partir de cette cartographie, un logiciel de décodage, selon les règles de la codification établie, déterminera et communiquera le pays de destination (ici le Japon) des étuis contenant les flacons de parfum.

De surcroît, on peut réaliser un tel marquage magnétique sur le carton contenant les étuis et sur une étiquette appliquée sur la palette, si ce carton et cette étiquette contiennent des particules magnétiques et sont réalisés comme le papier des étuis.

On peut pratiquer l'opération de lecture lors du conditionnement des flacons afin de vérifier que le marquage est correct et aussi lors d'un contrôle des produits, par exemple pour lutter contre les marchés parallèles.

### Exemple 2 :

1/ On réalise une étiquette en papier comportant en masse et réparties de façon uniforme dans toute sa structure des particules magnétiques de haute coercitivité de façon similaire à celle décrite pour fabriquer les papiers des étuis de l'exemple 1.
2/ On réalise un système de codification pour le nom du distributeur du produit sur lequel sera apposée l'étiquette, selon le même principe que pour le code du Japon de l'exemple 1.
   On partitionne l'étiquette en formant une grille munie d'axes X et Y, de six lignes de 10 mm de haut et 30 colonnes de 2 mm de large, soit en 180 surfaces (S₁, ..., S₁₈₀) auquelles sont attribuées les coordonnées centrées (Xn, Yp). On décide que le code du nom du distributeur correspond à la combinaison des centres des six surfaces (S₃, S₃₀, S₆₀, S₁₂₀, S₁₅₀, S₁₈₀) qui seront magnétisés.
3/ On fait passer l'étiquette dans un système d'écriture magnétique dit à fente et qui comporte six têtes montées en parallèle. L'étiquette défile à vitesse constante devant les têtes qui parcourent la totalité de la grille (2) et qui ne magnétisent, grâce à un système de pilotage, que les centres des six surfaces (S₃, S₃₀, S₆₀, S₁₂₀, S₁₅₀, S₁₈₀). La correspondance entre les coordonnées centrées de ces surfaces et le nom du distributeur est stockée dans le fichier (F) d'une base de données sur un ordinateur.
   On annonce le début des données à exploiter, par exemple, en magnétisant une suite de cinq plots (bits magnétiques) qui se suivent, cette suite de cinq plots étant présente en début de chaque lignes de la grille. Ce repérage permettra ainsi la synchronisation de la détection ultérieure du magnétisme des surfaces.
4/ On colle l'étiquette sur une bouteille de vin.
5/ On vérifie que l'information a bien été enregistrée de la façon suivante :
   On pose la bouteille sur un plateau tournant et on fait alors tourner ladite bouteille sur elle-même, dans le sens des aiguilles d'une montre, devant une rampe verticale mobile comportant six têtes de lecture magnétique à capteurs magnétorésistifs montées en parallèle. Un système optique permet de repérer le coin supérieur et le bord gauches de l'étiquette et est relié à la rampe de lecture afin de positionner correctement la rampe au niveau de l'étiquette. Ces têtes recherchent alors les suites des cinq bits magnétiques répérant le début des lignes de la grille de l'étiquette et font ensuite, en suivant les lignes de la grille, la détection de la présence ou de l'absence de magnétisme aux centres des surfaces de ladite grille.
   La rampe est réliée à un ordinateur. Les coordonnées (Xn, Yp). des centres des surfaces pour lesquels les têtes de lecture ont détecté une aimantation sont ensuite traitées par un algorithme permettant d'établir leur cartographie.A partir de cette cartographie, un logiciel de décodage, selon les règles de la codification établie, déterminera et communiquera le nom du distributeur du produit.
6/ Dans une autre opération ayant pour but de contrôler l'identification de la bouteille de vin par le nom de son distributeur, on réalise ainsi le contrôle :
   On introduit la bouteille dans un manchon, la bouteille étant posée sur un plateau qui peut tourner sur lui-même, le manchon est doté à l'intérieur d'un système de détection magnétique semblable à la rampe avec six têtes magnétorésistives décrites précédemment, ce système étant rétractable automatiquement en l'absence de bouteille pour que le manchon constitue une boite noire.
Les surfaces magnétisées sont détectées et le code du marquage peut être reconstitué comme décrit au paragraphe précédent.

### Exemple 3 :

1/ On réalise une feuille de papier avec des particules magnétiques uniformément réparties comme à l'exemple 1 pour faire une étiquette.
2/ Dans cet exemple on souhaite faire un marquage magnétique relativement au logo du fabricant du produit à contrôler d'après la représentation visuelle de ce logo.
Pour cela, on partitionne une aire de la surface de l'étiquette en formant une grille (2) (non matérialisée visuellement) constituée de dix colonnes de 3 mm de large et de cinq lignes de 3 mm de hauteur, soit une grille de cinquante surfaces égales (S₁, ..., S₅₀). Chaque surface a un centre de coordonnées (Xn, Yp) selon les axes d'abscisses X et d'ordonnées Y de la grille (2).

On construit une codification pour le logo donné, par exemple un crocodile, en analysant l'image du crocodile selon la même grille que la grille (2), par exemple à l'aide d'un logiciel d'analyse d'image, et en repérant parmi les cinquante surfaces de la grille, celles dont les coordonnées des centres des surfaces suffisent pour reconstituer l'image du crocodile en noir et blanc dans sa totalité. La correspondance entre les coordonnées centrées des surfaces retenues et le logo est stockée dans le fichier (F) d'une base de données sur un ordinateur.
3/ Sur le substrat formant l'étiquette, on magnétise les centres des surfaces correspondant à celles retenues grâce à une tête inductive qui balaye la grille (2) à la surface de l'étiquette. La tête d'enregistrement balaye la première ligne puis se positionne sur la ligne du dessous qu'elle balaye et ainsi de suite. Elle est activée lorsque qu'elle est positionnée sur une des surfaces retenues à marquer magnétiquement.

Le repérage de la zone de marquage magnétique est établi par rapport à une impression donnée repérée elle-même par reconnaissance optique.
La détection de la présence ou de l'absence de magnétisme se fait aussi par quadrillage de la zone de marquage magnétique, après repérage, à l'aide d'une tête magnétorésistive.
La position de la tête est enregistrée dans un fichier à chaque fois qu'une aimantation est détectée et on retrouve ainsi les coordonnées relatives aux centres des surfaces magnétisés. Grâce un logiciel qui réalisera la cartographie des centres magnétisés, et si nécessaire à l'aide d'un logiciel de reconstitution d'image, on établira alors l'image du logo que l'on peut faire apparaître sur l'écran de l'ordinateur qui traite les données analysées ou sur une imprimante qui lui est reliée.

### EXEMPLE 4 :

Selon une alternative à l'exemple 1, on réalise un étui en plastique de la façon suivante.

On réalise en premier lieu une dispersion de particules magnétiques de la façon suivante.
Des particules magnétiques sont dispersées sous agitation à l'aide d'un agent dispersant, tel qu'un polyacrylate, et éventuellement d'une résine de broyage, ayant une bonne compatibilité avec le milieu auquel elle sera incorporée ultérieurement. La pâte obtenue est ensuite traitée dans un moulin à billes pour détruire les agglomérats et individualiser les particules. La dispersion obtenue comporte 10 % de particules magnétiques en poids sec.

Les particules magnétiques sont des ferrites de barium qui ont une coercitivité de 218,84 x 10³ A/m (2750 Oe). La plus grande dimension des particules est inférieure à environ 1 µm.

Dans une extrudeuse à double vis, on mélange la dispersion de particules magnétiques et des granulés d'un copolymère statistique d'éthylène et de propylène pour former un mélange maître. On porte ce mélange à 210 °C. Après passage dans une filière multiorifices, le mélange maître obtenu est refroidi et séché. Le passage dans un granuleur permet d'obtenir des joncs (granulés) de taille constante.

Dans une extrudeuse à double vis, on introduit ce mélange maître avec un autre mélange maître comportant un copolymère éthylène-propylène et un agent antistatique et on porte ce mélange à 210°C. Après extrusion et calandrage, on obtient une feuille de format 70 X 100 cm.
Les feuilles obtenues sont translucides et ont une épaisseur de 300 µm.
Pour 100 parts en poids du copolymère, il y a 0,15 part d'agent antistatique et 0,05 part de particules magnétiques en poids sec.

Réalisation d'un étui : par découpe et rainage, les feuilles obtenues sont transformées en une boite d'emballage pour un flacon de parfum.

Le marquage magnétique de l'étui et son utilisation peuvent être réalisés comme à l'exemple 1.

### EXEMPLE 5 :

Selon une autre alternative à la réalisation d'étiquette, on réalise une étiquette magnétique transparente en plastique de la façon suivante :

On applique sur un film transparent de poly(éthylène téréphatalate), par couchage à râcle, un adhésif acrylique en milieu solvant (mélange d'acétate d'éthyle et d'heptane) qui contient les particules magnétiques. On a introduit 0,19 parts des particules magnétiques sous forme de la dispersion magnétique de l'exemple 1 pour 100 parts de l'adhésif en poids sec. La quantité d'adhésif magnétique déposée est de 23 g/m² en sec. Le film support a une épaisseur de 23 µm avant de déposer l'adhésif.
On obtient une étiquette adhésive et magnétique transparente.
On applique cette étiquette sur un flacon en plastique transparent. On n'altère pas l'aspect esthétique du flacon.

Le marquage magnétique de l'étui et son utilisation peuvent être réalisés comme à l'exemple 2.
Dans une variante, on peut emballer le flacon ainsi étiqueté dans l'étui de l'exemple 1 ou de l'exemple 4, et ainsi faire le marquage magnétique à la fois dans l'emballage et dans l'étiquette. On a donc un lien entre le produit et son emballage.

### EXEMPLE 6 :

Selon une autre alternative à la réalisation d'emballage, on réalise un emballage comme suit.

En premier lieu, on réalise une dispersion aqueuse de particules magnétiques de la façon suivante :
La poudre de ferrites de barium est ajoutée sous agitation à une solution aqueuse d'un agent tensio-actif, à la fois mouillant et dispersant, tel qu'un sel d'ammonium du poly(acide acrylique) et éventuellement une résine de broyage ayant une bonne compatibilité avec le milieu auquel elle sera incorporée ultérieurement. La pâte obtenue est ensuite traitée dans un moulin à billes pour détruire les agglomérats et individualiser les particules. Le concentré de particules magnétiques individualisées est ensuite redilué et stabilisé contre la sédimentation des particules par ajout d'un agent modificateur de rhéologie, comme par exemple un gel aqueux de bentonites ou de silices pyrogènées.
La dispersion comporte, en poids sec, 10 pour cent de particules magnétiques.

On réalise une feuille d'emballage avec une couche d'impression-écriture et magnétique de la façon suivante :
- on réalise une feuille de polyoléfines de 400 µm,
- on applique sur la feuille par lame d'air, une composition en milieu aqueux comprenant :
   - 100 parts en poids sec d'un mélange de carbonate de calcium et de kaolin,
   - 100 parts en poids sec d'un liant styrène-butadiène carboxylé introduit sous forme d'une dispersion aqueuse stabilisée (latex),
   - 0,35 part en poids sec de particules magnétiques introduites sous forme de la dispersion des exemples précédents.

La quantité déposée est de 10 g/m² en poids sec.
On forme un étui comme à l'exemple 4 et on réalise le marquage et le décodage du marquage comme à l'exemple 4.

### EXEMPLE 7 :

On réalise un emballage avec une bande holographique transparente de la façon suivante :
- Sur une feuille de polypropylène, on applique par couchage sérigraphique, un primer d'adhérence qui contient les particules magnétiques. Ce primer est à base d'un polymère styrène-acrylique en milieu aqueux. On a introduit 0,15 part de particules magnétiques sous forme de dispersion magnétique de l'exemple 3 pour 100 parts du primer en poids sec. On a déposé 10 g/m² en sec du primer contenant les particules.
- On applique une bande holographique transparente d'une épaisseur de 6 µm et de 5 cm de large, qui comporte un adhésif thermoscellable, par la méthode connue du transfert à chaud et sous pression, sur le primer magnétique de la feuille de polypropylène.

L'observation de l'hologramme n'est pas affectée par la présence de la couche magnétique.

On réalise un marquage comme à l'exemple 4 au niveau de la bande holographique.
On détecte le marquage sans être gêné par la présence de la bande holographique.

## Revendications

1. Substrat (1) comportant un marquage magnétique relatif à une information, telle qu'une information alphanumérique ou graphique, ledit substrat étant tel qu'il comporte au moins une zone comportant des particules magnétiques permettant ce marquage invisible à l'oeil nu et que
- lesdites particules magnétiques sont comprises dans la masse du substrat et/ou dans un revêtement à la surface du substrat,
- lesdites particules magnétiques sont réparties de manière uniforme dans ladite zone,
- lesdites particules magnétiques n'affectent pas les caractéristiques d'aspect de ladite zone en l'absence de tout masquage desdites particules pour les rendre invisibles et,
- lesdites particules vérifient les caractéristiques de concentrations suivantes, prises séparément ou en combinaison :
a) lesdites particules magnétiques sont comprises dans la masse dudit substrat ou dudit revêtement appliqué en surface dudit substrat entre 0,02 et 0,07% en poids dans ladite zone,
b) lesdites particules sont comprises dans ledit revêtement appliqué en surface dudit substrat selon une quantité comprise entre 5 et 50 mg/m² dans ladite zone, et
- une aire de ladite zone avec les particules magnétiques est partitionnée en surfaces (S1, S2, S3), selon une grille (2) non matérialisée visuellement, chaque surface ayant un centre de coordonnées (Xn, Yp) selon les axes d'abscisses X et d'ordonnées Y de la grille (2),
- certaines des surfaces (S1, S2, S3...) de la grille sont magnétisées en leurs centres respectifs selon un système de codification préétabli mettant en correspondance une combinaison d des surfaces magnétisées du marquage magnétique avec ladite information,
- la présence ou l'absence de magnétisme au centre de chaque surface (S1, S2, S3...) de la grille (2) est susceptible d'être détectée par une ou plusieurs têtes magnétiques et d'être convertie sous forme d'un signal électrique, l'état du signal détecté pouvant être déterminé pour chacun des centres de coordonnées (Xn, Yp) respectifs de chacune des surfaces (S1, S2, S3...) de ladite grille.

2. Substrat selon la revendication 1, **caractérisé par le fait qu'**il comprend une impression repérée par reconnaissance optique, par rapport à laquelle certaines des surfaces (S1, S2, S3...) de la grille (2) sont magnétisées ou par rapport à laquelle chaque centre de chaque surface de la grille est détecté.

3. Substrat selon l'une des revendications précédentes, **caractérisé par le fait que** les particules magnétiques ont une coercitivité supérieure ou égale à 135.103A/m, de préférence supérieure ou égale à 218.103A/m.

4. Substrat selon l'une des revendications précédentes, **caractérisé par le fait que** les particules magnétiques ont une taille moyenne inférieure à 2 µm, de préférence comprise entre 0,1 et 1 µm, de préférence encore entre 0,1 et 0,5 µm.

5. Substrat selon l'une des revendications précédentes, **caractérisé par le fait que** ledit substrat est une feuille comportant des fibres de cellulose.

6. Substrat selon l'une des revendications précédentes, **caractérisé en ce qu'**il s'agit d'une feuille d'une épaisseur comprise entre 1 et 2 000 µm.

7. Substrat selon l'une des revendications précédentes, **caractérisé en ce qu'**il s'agit d'une feuille d'une épaisseur comprise entre 1 et 800 µm, de préférence entre 10 et 600 µm.

8. Substrat selon l'une des revendications précédentes, **caractérisé en ce que** lesdites particules magnétiques sont comprises dans ledit revêtement à la surface du substrat et que ledit revêtement consiste en un adhésif.

9. Substrat selon l'une des revendications 1 à 7, **caractérisé en ce que** lesdites particules magnétiques sont comprises dans ledit revêtement à la surface du substrat et que ledit revêtement consiste en vernis.

10. Substrat selon l'une des revendications 1 à 7, **caractérisé en ce que** lesdites particules magnétiques sont comprises dans ledit revêtement à la surface du substrat et que ledit revêtement consiste en une encre.

11. Substrat selon l'une des revendications 1 à 7, **caractérisé en ce que** lesdites particules sont comprises dans un dit revêtement à la surface du substrat et que ledit revêtement consiste en une composition de couchage ou d'encollage.

12. Substrat selon l'une des revendications 1 à 7, **caractérisé en ce que** lesdites particules sont comprises dans un dit revêtement à la surface du substrat et que ledit revêtement consiste en un film, en particulier un film plastique

13. Substrat selon l'une des revendications 1 à 7, **caractérisé en ce que** lesdites particules sont comprises dans un dit revêtement, en particulier un vernis thermoscellant, à la surface d'un élément de sécurité.

14. Substrat selon l'une des revendications 1 à 7, **caractérisé en ce que** lesdites particules sont comprises dans la masse d'un élément de sécurité.

15. Substrat selon l'une des revendications précédentes, **caractérisé en ce que** lesdites particules sont comprises dans un film, en particulier un film en plastique et plus particulièrement un film d'emballage ou un film de protection.

16. Substrat selon l'une des revendications précédentes, **caractérisé en ce que** les particules magnétiques sont comprises dans un revêtement appliqué sur un hologramme ou dans une couche constitutive d'un hologramme.

17. Substrat selon la revendication 16, **caractérisé en ce que** ledit hologramme est un hologramme transparent ou hologramme partiellement démétallisé.

18. Substrat selon l'une des revendications précédentes, **caractérisé par le fait que** ledit substrat a une couleur claire, notamment blanche, crème ou jaune pâle.

19. Substrat selon l'une des revendications précédentes, **caractérisé par le fait que** la zone dudit substrat ou d'un dit revêtement comportant lesdites particules, a une luminosité L* selon le système CIELAB supérieure à 70 et de préférence à 80.

20. Substrat selon l'une des revendications précédentes, **caractérisé par le fait que** la zone dudit substrat ou d'un dit revêtement comportant lesdites particules, a une blancheur ISO selon la norme ISO 2471 supérieure ou égale à 60% sous illuminant D65 sans UV sous un angle d'observation de 10°.

21. Substrat selon l'une des revendications précédentes, **caractérisé par le fait que** la zone du substrat comportant lesdites particules a une blancheur CIE selon la formule CIELAB du substrat est supérieure ou égale à 20% sous illuminant D65 sans UV sous un angle d'observation de 10°.

22. Substrat selon l'une des revendications précédentes, **caractérisé en ce que** ledit substrat ou ledit revêtement à la surface du substrat est transparent ou translucide.

23. Substrat selon l'une des revendications précédentes, **caractérisé par le fait qu'**il a un grammage supérieur ou égal à 200 g/m².

24. Substrat selon l'une des revendications précédentes, **caractérisé par le fait que** ledit substrat est un emballage.

25. Substrat selon l'une des revendications 1 à 11, **caractérisé par le fait que** ledit substrat est une étiquette.

26. Substrat selon l'une des revendications précédentes, **caractérisé par le fait que** la zone comportant lesdites particules magnétiques représente toute l'étendue du substrat.

27. Procédé de réalisation d'un substrat (1) selon l'une des revendications précédentes, avec un marquage magnétique relatif à une information, telle qu'une information alphanumérique ou graphique et de décodage dudit marquage comportant les étapes suivantes:
- on réalise un substrat en mélangeant une dispersion desdites particules magnétiques avec le milieu de fabrication dudit substrat ou d'un dit revêtement à la surface du substrat, selon lesdites concentrations,
- on partitionne une aire de la zone comportant les particules magnétiques en surfaces (S1, S2, S3,...), selon une grille (2), chaque surface ayant un centre de coordonnées (Xₙ, Yp) selon les axes d'abscisses X et d'ordonnées Y de la grille (2) et on magnétise le centre de certaines des surfaces (S1, S2, S3...) de la grille (2) selon un système de codification préétabli mettant en correspondance une combinaison des surfaces magnétisées ou marquage magnétique avec ladite information, cette correspondance étant mise dans un fichier (F) de base de données, la présence ou l'absence de magnétisme au centre de chaque surface (S1, S2, S3...) de la grille (2) étant susceptible d'être détectée par une ou plusieurs têtes magnétiques et d'être convertie sous forme d'un signal électrique, et l'état du signal détecté pouvant être déterminé pour chacun des centres de coordonnées (Xₙ, Yₚ) respectifs des surfaces (S1, S2, S3...) de ladite grille (2).

28. Procédé selon la revendication 27, dans lequel la dispersion comprend un agent tensioactif mouillant et dispersant.

29. Procédé selon la revendication 27 ou 28, **caractérisé en ce :**
- **qu'**on détecte la présence ou l'absence de magnétisme aux centres des surfaces (S1, S2, S3...) da la grille (2) qui est alors converti sous forme d'un signal électrique,
- **qu'**on détermine l'état du signal détecté pour chacun des centres de coordonnées (Xn, Yp) respectifs des surfaces (S1, S2, S3...) de ladite grille,
- **qu'**on détermine la combinaison desdits centres des surfaces présentant du magnétisme,
- **qu'**on analyse et décode cette combinaison en liaison avec le fichier (F) relatif au système de codification préétabli pour fournir l'information recherchée.

30. Procédé selon l'une des revendications précédentes 27 ou 29, **caractérisé par le fait que** le marquage est réalisé à l'aide d'au moins une tête d'écriture inductive et que la détection de présence ou d'absence de magnétisme est réalisée à l'aide d'au moins une tête magnétorésistive.

31. Procédé selon l'une des revendications précédentes 27 ou 29, **caractérisé par le fait que** le marquage est réalisé à l'aide d'au moins une tête d'écriture inductive et que la détection de présence ou d'absence de magnétisme, est réalisée à l'aide d'une pluralité de têtes magnétorésistives positionnées sur les centres des surfaces de la grille (2).

32. Procédé selon la revendication précédente, **caractérisé par le fait que** la/les tête(s) d'écriture et que la/les tête(s) de détection sont pilotées par système doté d'un logiciel permettant de parcourir la totalité de la grille (2).

33. Procédé selon l'une des revendications 27 à 29, **caractérisé par le fait que** ladite information à marquer est analysée selon une même grille que la grille(2) par un logiciel d'analyse d'image.

34. Procédé selon l'une des revendications 27 à 33, **caractérisé par le fait que** l'information décodée est reconstruite visuellement à l'aide d'un logiciel de reconstitution d'image.

35. Dispositif permettant le marquage magnétique d'une information relative à un produit et le décodage dudit marquage d'un substrat comportant :
- un substrat (1) selon l'une des revendications 1 à 18, mis en liaison avec le produit relatif à l'information,
- un moyen d'écriture magnétique qui réalise le marquage magnétique du substrat (1)
- un moyen de détection de la présence ou de l'absence de magnétisme, selon un repère visuel sur le substrat,
- un moyen convertissant le magnétisme de chaque centre respectif des surfaces (S1, S2, S3...) sous forme d'un signal électrique,
- un moyen déterminant les coordonnées des centres desdites surfaces présentant du magnétisme afin d'établir la combinaison du marquage magnétique,
- un moyen traduisant cette combinaison de coordonnées en ladite information, d'après le système de codification préétabli.

36. Dispositif permettant le marquage magnétique d'une information relative à un produit et le décodage dudit marquage d'un substrat comportant :
- un substrat (1) selon l'une des revendications 1 à 18, en lien avec le produit,
- un moyen d'écriture magnétique qui réalise le marquage magnétique d'une information relative au produit sur le substrat (1)
- un moyen de détection de la présence ou de l'absence de magnétisme, selon un angle dudit produit, un angle du substrat ou un angle du substrat,
- un moyen convertissant le magnétisme de chaque centre respectif des surfaces (S1, S2, S3...) sous forme d'un signal électrique,
- un moyen déterminant les coordonnées des centres desdites surfaces présentant du magnétisme afin d'établir la combinaison du marquage magnétique,
- un moyen traduisant cette combinaison de coordonnées en ladite information, d'après le système de codification préétabli.

37. Dispositif selon l'une des revendications 35 et 36, **caractérisé par le fait qu'**il comporte un moyen (9) qui traduit ladite information alphanumérique ou graphique reconstituée sous forme vocale.

38. Dispositif selon l'une des revendications 3j à 37, **caractérisé par le fait que** la/les têtes d'écriture magnétique est/sont de type inductif.

39. Dispositif selon l'une des revendications 35 à 38, **caractérisé par le fait que** la/les têtes de détection du moyen de détection magnétique est/sont de type magnétorésistif.

40. Dispositif selon l'une des revendications 35 à 39, **caractérisé par le fait que** le moyen d'écriture ou de lecture est choisi parmi les moyens comportant une ou plusieurs têtes mobiles, les moyens comportant des têtes fixes en un nombre égal à celui du nombre de surfaces (S1, S2, S3,...) constituant la grille et positionnées sur les centres des surfaces de la grille.

41. Dispositif selon l'une des revendications 35 à 40, **caractérisé par le fait que** le moyen de détection est choisi parmi les moyens comportant une ou plusieurs têtes mobiles, les moyens comportant des têtes fixes en un nombre égal à celui du nombre de surfaces (S1, S2, S3, ...) constituant la grille.

42. Dispositif selon l'une des revendications 35 à 41, **caractérisé par le fait que** moyen d'écriture est relié à un système de pilotage doté d'un logiciel générant les coordonnées (Xn, Yp) respectives des centres des surfaces à aimanter en liaison avec le système de codification préétabli.

43. Dispositif selon l'une des revendications 35 à 42, **caractérisé par le fait que** le moyen détection est relié à :
- un système de pilotage doté d'un logiciel permettant que la/les têtes de détection parcourent la totalité de la grille (2),
- un système d'analyse du signal lu par les têtes de détection,
- un logiciel permettant de déterminer les coordonnées des centres des surfaces magnétisés permettant d'établir la combinaison du marquage magnétique,
- un logiciel permettant de traduire cette combinaison en ladite information, en liaison avec le fichier (F) relatif au système de codification préétabli.

## Claims

1. Substrate (1) including a magnetic marking relating to information, such as alphanumeric or graphical information, said substrate being such that it includes at least one zone including magnetic particles enabling such marking invisible to the naked eye and:
- said magnetic particles are contained in the mass of the substrate and/or in a coating on the surface of the substrate,
- said magnetic particles are distributed uniformly in said zone,
- said magnetic particles do hot affect the appearance characteristics of said zone without any masking of said particles to render them invisible, and
- said particles satisfy the following concentration characteristics, separately or in combination:
a) said magnetic particles in said zone are contained in the mass of said substrate or said coating applied to the surface of said substrate in an amount between 0.02 and 0.07% by weight,
b) said particles in said zone are contained in said coating applied to the surface of said substrate in an amount between 5 and 50 mg/m², and
- an area of said zone with the magnetic particles is divided into surfaces (S1, S2, S3) according to a grid (2) that is not visually materialised, each surface having a centre of coordinates (Xn, Yp) on the abscissa axis X and the ordinate axis Y of the grid (2),
- some of the surfaces (S1, S2, S3, etc.) of the grid are magnetised at their respective centres according to a predefined coding system relating a combination of the magnetised surfaces of the magnetic marking with said information,
- the presence or the absence of magnetism at the centre of each surface (S1, S2, S3, etc.) of the grid (2) is detectable by one or more magnetic heads and convertible into the form of an electrical signal, it being possible to detect the state of the respective signal detected for each of the centres of coordinates (Xn, Yp) of each of the surfaces (S1, S2, S3, etc.) of said grid.

2. Substrate according to claim 1, **characterised in that** it includes printing identified by optical recognition relative to which some of the surfaces (S1, S2, S3, etc.) of the grid (2) are magnetised or relative to which each centre of each surface of the grid is detected.

3. Substrate according to any of the preceding claims, **characterised in that** the magnetic particles have a coercivity greater than or equal to 135.103A/m, preferably greater than or equal to 218.103A/m.

4. Substrate according to any of the preceding claims, **characterised in that** the magnetic particles have an average size less than 2 µm, preferably between 0.1 and 1 µm, even more preferably between 0.1 and 0.5 µm.

5. Substrate according to any of the preceding claims, **characterised in that** said substrate is a sheet including cellulose fibres.

6. Substrate according to any of the preceding claims, **characterised in that** it is a sheet with a thickness between 1 and 2000 µm.

7. Substrate according to any of the preceding claims, **characterised in that** it is a sheet with a thickness between 1 and 800 µm, preferably between 10 and 600 µm.

8. Substrate according to any of the preceding claims, **characterised in that** said magnetic particles are contained in said coating on the surface of the substrate and said coating consists of an adhesive.

9. Substrate according to any of claims 1 to 7, **characterised in that** said magnetic particles are contained in said coating on the surface of the substrate and said coating consists of varnish.

10. Substrate according to any of claims 1 to 7, **characterised in that** said magnetic particles are contained in said coating on the surface of the substrate and said coating consists of an ink.

11. Substrate according to any of claims 1 to 7, **characterised in that** said magnetic particles are contained in said coating on the surface of the substrate and said coating consists of a bedding or sticking composition.

12. Substrate according to any of claims 1 to 7, **characterised in that** said magnetic particles are contained in said coating on the surface of the substrate and said coating consists of film, in particular a plastic film.

13. Substrate according to any of claims 1 to 7, **characterised in that** said particles are contained in said coating, in particular a heat-seal varnish, on the surface of a security element.

14. Substrate according to any of claims 1 to 7, **characterised in that** said particles are contained in the mass of a security element.

15. Substrate according to any of the preceding claims, **characterised in that** said particles are contained in a film, in particular a plastic film and more particularly a packaging or protection film.

16. Substrate according to any of the preceding claims, **characterised in that** the magnetic particles are contained in a coating applied to a hologram or in a constituent layer of a hologram.

17. Substrate according to claim 16, **characterised in that** said hologram is a transparent hologram or a partially-demetallised hologram.

18. Substrate according to any of the preceding claims, **characterised in that** said substrate has a light colour, notably white, cream or pale yellow.

19. Substrate according to any of the preceding claims, **characterised in that** the zone of said substrate or said coating containing said particles has a luminosity L* according to the CIELAB system greater than 70 and preferably greater than 80.

20. Substrate according to any of the preceding claims, **characterised in that** the zone of said substrate or said coating containing said particles has an ISO whiteness according to the ISO 2471 standard greater than or equal to 60% under UV-free D65 illumination at an observation angle of 10°.

21. Substrate according to any of the preceding claims, **characterised in that** the zone of the substrate containing said particles has a CIE whiteness according to the CIELAB formula greater than or equal to 20% under UV-free D65 illumination at an observation angle of 10°.

22. Substrate according to any of the preceding claims, **characterised in that** said substrate or said coating on the surface of the substrate is transparent or translucent.

23. Substrate according to any of the preceding claims, **characterised in that** its weight per unit area is greater than or equal to 200 g/m².

24. Substrate according to any of the preceding claims, **characterised in that** said substrate constitutes packaging.

25. Substrate according to any of claims 1 to 11, **characterised in that** said substrate is a label.

26. Substrate according to any of the preceding claims, **characterised in that** the zone containing said magnetic particles represents the entire extent of the substrate.

27. Method of producing a substrate (1) according to any of the preceding claims with a magnetic marking relating to information, such as alphanumeric or graphical information, and of decoding said marking, including the following steps:
- a substrate is produced by mixing a suspension of said magnetic particles in the fabrication medium of said substrate or said coating on the surface of the substrate according to said concentrations,
- an area of the zone containing the magnetic particles is divided into surfaces (S1, S2, S3, etc.) according to a grid (2), each surface having a centre of coordinates (Xn, Yp) on the abscissa axis X and the ordinate axis Y of the grid (2), some of the surfaces (S1, S2, S3, etc.) of the grid are magnetised at their respective centres according to a predefined coding system relating a combination of the magnetised surfaces of the magnetic marking with said information, this relationship being placed in a database file (F), the presence or the absence of magnetism at the centre of each surface (S1, S2, S3, etc.) of the grid (2) being detectable by one or more magnetic heads and convertible into the form of an electrical signal, it being possible to detect the state of the respective signal detected for each of the centres of coordinates (Xn, Yp) of each of the surfaces (S1, S2, S3, etc.) of said grid (2).

28. Method according to claim 27, wherein the suspension contains a dispersant and wetting surfactant.

29. Method according to claim 27 or 28, **characterised in that**:
- the presence or the absence of magnetism at the centres of the surfaces (S1, S2, S3, etc.) of the grid (2) is detected and then converted into the form of an electrical signal,
- the state of the respective detected signal for each of the centres of coordinates (Xn, Yp) of the surfaces (S1, S2, S3, etc.) of said grid is determined,
- the combination of said centres of the magnetised surfaces is determined,
- this combination is analysed and decoded in conjunction with the file (F) relating to the predefined coding system to furnish the required information.

30. Method according to either of the preceding claims 27 or 29, **characterised in that** the marking is produced by means of at least one inductive writing head and the presence or absence of magnetism is detected by means of at least one magnetoresistive head.

31. Method according to either of the preceding claims 27 or 29, **characterised in that** the marking is produced by means of at least one inductive writing head and the presence or absence of magnetism is detected by means of a plurality of magnetoresistive heads positioned at the centres of the surfaces of the grid (2).

32. Method according to the preceding claim, **characterised in that** the writing head or heads and the detection head or heads are controlled by a system provided with software for scanning the whole of the grid (2).

33. Method according to any of claims 27 to 29, **characterised in that** said information to be marked is analysed by image analysis software according to the same grid as the grid (2).

34. Method according to any of claims 27 to 33, **characterised in that** the decoded information is reconstructed visually by means of image reconstitution software.

35. Device for magnetically marking information relating to a product and decoding said marking on a substrate, including:
- a substrate (1) according to any of claims 1 to 18 associated with the product relating to the information,
- magnetic writing means that perform the magnetic marking of the substrate (1),
- means for detecting the presence or the absence of magnetism according to a visual marking on the substrate,
- means for converting the respective magnetisation of each centre of the surfaces (S1, S2, S3, etc.) into the form of an electrical signal,
- means for determining the coordinates of the centres of said magnetised surfaces in order to establish the combination of the magnetic marking,
- means for translating this combination of coordinates into said information according to the predefined coding system.

36. Device for magnetically marking on a substrate information relating to a product and for decoding said marking, including:
- a substrate (1) according to any of claims 1 to 18 associated with the product,
- magnetic writing means that produce on the substrate (1) the magnetic marking of information relating to the product,
- means for detecting the presence or the absence of magnetism according to an angle of said product, an angle of the substrate or an angle of the substrate,
- means for converting the respective magnetisation of each centre of the surfaces (S1, S2, S3, etc.) into the form of an electrical signal,
- means for determining the coordinates of the centres of said magnetised surfaces in order to establish the combination of the magnetic marking,
- means for translating this combination of coordinates into said information according to the predefined coding system.

37. Device according to either of claims 35 and 36, **characterised in that** it includes means (9) for translating said reconstituted alphanumeric or graphical information into vocal form.

38. Device according to any of claims 35 to 37, **characterised in that** the magnetic writing head or each of the magnetic writing heads is of inductive type.

39. Device according to any of claims 35 to 38, **characterised in that** the magnetic writing head or each of the magnetic writing heads is of magnetoresistive type.

40. Device according to any of claims 35 to 39, **characterised in that** the writing or reading means are selected from means including one or more mobile heads, the means including a number of fixed heads equal to the number of surfaces (S1, S2, S3, etc.) constituting the grid and positioned at the centres of the surfaces of the grid.

41. Device according to any of claims 35 to 40, **characterised in that** the detection means are selected from means including one or more mobile heads, the means including a number of fixed heads equal to the number of surfaces (S1, S2, S3, etc.) constituting the grid.

42. Device according to any of claims 35 to 41, **characterised in that** the writing means are connected to a control system provided with software for generating in conjunction with the predefined coding system the respective coordinates (Xn, Yp) of the centres of the surfaces to be magnetised.

43. Device according to any of claims 35 to 42, **characterised in that** the detection means are connected to:
- a control system provided with software enabling the detection head or each of the detection heads to cover the whole of the grid (2),
- a system for analysing the signal read by the detection heads,
- software for determining the coordinates of the centres of the magnetised surfaces to establish the combination of the magnetic marking,
- software for translating this combination into said information in conjunction with the file (F) relating to the predefined coding system.

## Patentansprüche

1. Substrat (1) mit einer magnetischen Markierung, die sich auf eine Information, wie zum Beispiel eine alphanumerische oder grafische Information, bezieht, wobei das Substrat so beschaffen ist, dass es wenigstens eine Zone mit magnetischen Teilchen aufweist, die die Markierung für das bloße Auge unsichtbar macht, und dass
- die magnetischen Teilchen in der Substratmasse und/oder in einer Beschichtung auf der Oberflächen des Substrats enthalten sind,
- die magnetischen Teilchen gleichmäßig in der Zone verteilt sind,
- die magnetischen Teilchen, um die Maskierung unsichtbar zu machen, nicht die Erscheinungcharakteristika der Zone bei komplett fehlender Maskierung der Teilchen beeinflüssen, und
die Teilchen wenigstens eine oder mehrere der folgenden Konzentratiönscharakteristika aufweisen:
(a) die magnetischen Teilchen sind in der Substratmasse oder in der auf einer Oberfläche des Substrats aufgebrachten Beschichtung mit zwischen 0,02 und 0,07 Gew.-% in der Zone enthalten,
(b) die Teilchen sind in der auf der Oberfläche des Substrats aufgebrachten Beschichtung in einer Menge zwischen 5 und 50 mg/m² in der Zone enthalten, und
- eine Fläche der Zone mit den magnetischen Teilchen in Oberflächen (S1, S2, S3) gemäß einem visuell nicht vorhandenen Gitter (2) unterteilt ist, wobei jede Oberfläche ein Koordinatenzentrum (Xn, Yp) gemäß der Abszissenachse X und der Ordinatenachse Y des Gitters (2) aufweist,
- bestimmte Oberflächen (S 1, S2, S3...) des Gitters in ihren jeweiligen Zentren gemäß einem vorbestimmten Kodiersystem magnetisiert sind, das eine Entsprechungsbeziehung der magnetisierten Oberflächen der magnetischen Markierung mit der genannten Information herstellt,
- das Vorhandensein oder Fehlen von Magnetismus im Zentrum jeder Oberfläche (S1, S2, S3...) des Gitters (2) dazu ausgelegt ist, durch einen oder mehrere Magnetköpfe detektiert und in ein elektrisches Signal konvertiert zu werden, wobei der Zustand des detektierten Signals für jedes der Koordinatenzentren (Xn, Yp) bezüglich jeder Oberfläche (S1, S2, S3...) des Gitters bestimmt werden kann.

2. Substrat nach Anspruch 1, **dadurch gekennzeichnet, dass** es einen Markierungsaufdruck zur optischen Erkennung aufweist, mittels dem bestimmte Oberflächen (S1, S2, S3...) des Gitters (2) magnetisiert sind oder Jedes Zentrum jeder Oberfläche des Gitters detektiert wird.

3. Substrat nach einem der vorstehenden Ansprüche, **dadurch gekennzeichnet, dass** die magnetischen Teilchen eine Koerzitivität von mindestens 135,103 A/m, vorzugsweise mindestens 218.103 A/m aufweisen.

4. Substrat nach einem der vorstehenden Ansprüche, **dadurch gekennzeichnet, dass** die magnetischen Teilchen eine mittlere Größe von weniger als 2 µm, vorzugsweise zwischen 0,1 und 1 µm, besonders vorzugsweise zwischen 0,1 und 0,5 µm aufweisen.

5. Substrat nach einem der vorstehenden Ansprüche, **dadurch gekennzeichnet, dass** das Substrat ein Cellulosefasern enthaltendes Blatt ist.

6. Substrat nach einem der vorstehenden Ansprüche, **dadurch gekennzeichnet, dass** es in einem Blatt mit einer Dicke zwischen 1 und 2000 µm besteht.

7. Substrat nach einem der vorstehenden Ansprüche, **dadurch gekennzeichnet, dass** es in einem Blatt mit einer Dicke zwischen 1 und 800 µm, vorzugsweise zwischen 10 und 600 µm besteht.

8. Substrat nach einem der vorstehenden Ansprüche, **dadurch gekennzeichnet, dass** die magnetischen Teilchen in der Beschichtung auf der Oberfläche des Substrats enthalten sind, und die Beschichtung aus einem Klebstoff besteht.

9. Substrat nach einem der Ansprüche 1 bis 7, **dadurch gekennzeichnet, dass** die magnetischen Teilchen in der Beschichtung auf der Oberfläche des Substrats enthalten sind und die Beschichtung aus einem Lack besteht.

10. Substrat nach einem der Ansprüche 1 bis 7, **dadurch gekennzeichnet, dass** die magnetischen Teilchen in der Beschichtung auf der Oberfläche des Substrats enthalten sind und die Beschichtung aus einer Tinte besteht.

11. Substrat nach einem der Ansprüche 1 bis 7, **dadurch gekennzeichnet, dass** die Teilchen in der Beschichtung auf der Oberfläche des Substrats enthalten sind und die Beschichtung aus einer Einbettungs- oder Aufklebezusammensetzung besteht.

12. Substrat nach eine der Ansprüche 1 bis 7, **dadurch gekennzeichnet, dass** die Teilchen in der Beschichtung auf der Oberfläche des Substrats enthalten sind und die Beschichtung aus einem Film, insbesondere einem Kunststofffilim besteht.

13. Substrat nach einem der Ansprüche 1 bis 7, **dadurch gekennzeichnet, dass** die Teilchen in der Beschichtung, insbesondere einem Thermosiegellack, auf der Oberfläche eines Sicherheitselements enthalten sind.

14. Substrat nach einem der Ansprüche 1 bis 7, **dadurch gekennzeichnet, dass** die Teilchen in einer Sicherheitselement-Masse enthalten sind.

15. Substrat nach einem der vorstehenden Ansprüche, **dadurch gekennzeichnet, dass** die Teilchen in einem Film, insbesondere einem Plastikfilm und ferner insbesondere einem Verpackungsfilm oder einem Schutzfilm, enthalten sind.

16. Substrat nach einem der vorstehenden Ansprüche, **dadurch gekennzeichnet, dass** die magnetischen Teilchen in einer Beschichtung enthalten sind, die auf einem Hologramm oder einer das Hologramm bildenden Schicht aufgebracht ist.

17. Substrat nach Anspruch 16, **dadurch gekennzeichnet, dass** das Hologramm ein transparentes oder teilweises entmetallisiertes Hologramm ist.

18. Substrat nach einem der vorstehenden Ansprüche, **dadurch gekennzeichnet, dass** das Substrat eine helle Farbe, insbesondere weiß, cremefarben oder blassgelb hat.

19. Substrat nach einem der vorstehenden Ansprüche, **dadurch gekennzeichnet, dass** die Zone des Substrats oder der die Teilchen enthaltenden Beschichtung eine Leuchtkraft L* gemäß dem System CIELAB von mehr als 70, vorzugsweise mehr als 80, aufweist.

20. Substrat nach einem der vorstehenden Ansprüche, **dadurch gekennzeichnet, dass** die Zone des Substrats oder der die Teilchen enthaltenden Beschichtung eine ISO-Weiße gemäß der ISO-Norm 2471 von mindestens 60% bei Bestrahlung mit D65 ohne UV unter einem Beobachtungswinkel von 10° aufweist.

21. Substrat nach einem der vorstehenden Ansprüche, **dadurch gekennzeichnet, dass** die die Teilchen enthaltende Zone des Substrats, eine CIE-Weiße gemäß der CIELAB-Formel des Substrats von mindestens 20% bei Bestrahlung mit D65 ohne UV unter einem Beobachtungswinkel von 10 aufweist.

22. Substrat nach einem der vorstehenden Ansprüche, **dadurch gekennzeichnet, dass** das Substrat oder die Beschichtung auf der Oberfläche des Substrats transparent oder transluzent ist.

23. Substrat nach einem der vorstehenden Ansprüche, **dadurch gekennzeichnet, dass** es ein Flächengewicht von mindestens 200 g/m² aufweist.

24. Substrat nach einem der vorstehenden Ansprüche, **dadurch gekennzeichnet, dass** das Substrat eine Verpackung ist.

25. Substrat nach einem der Ansprüche 1 bis 11, **dadurch gekennzeichnet, dass** das Substrat ein Etikett ist.

26. Substrat nach einem der vorstehenden Ansprüche, **dadurch gekennzeichnet, dass** die die magnetischen Teilchen enthaltende Zone die gesamte Flächenausdehnung des Substrats darstellt.

27. Verfahren zur Herstellung eines Substrats (1) nach einem der vorstehenden Ansprüche, das eine magnetische Markierung bezüglich einer Information, wie zum Beispiel einer alphanumerischen oder grafischen Information, aufweist, sowie zur Dekodierung der Markierung, wobei in dem Verfahren:
- ein Substrat durch Mischen einer Dispersion der magnetischen Teilchen mit dem Herstellungsmedium des Substrats oder der Beschichtung auf der Oberfläche des Substrats gemäß den genannten Konzentrationen hergestellt wird,
- ein Flächenbereich der die magnetischen Teilchen enthaltenden Zone gemäß einem Gitter (2) in Oberflächen (S1, S2, S3,...) unterteilt wird, wobei jede Oberfläche ein Koordinatenzentrum (Xn, Yp) gemäß der Abszissenachse X und der Ordinatenachse Y des Gitters (2) aufweist, und das Zentrum von bestimmten Oberflächen (S1, S2, S3...) des Gitters (2) gemäß einem vorbestimmten Kodiersystem magnetisiert wird, das eine Entsprechungsbeziehung der magnetisierten Oberflächen oder der magnetischen Markierung mit der genannten Information herstellt, wobei die Entsprechung in einer datenbasierten Datei (F) niedergelegt ist, das Vorhandensein oder Fehlen von Magnetismus im Zentrum jeder Fläche (S1, S2, S3...) des Gitters (2) dazu geeignet ist, von einem oder mehreren Magnetköpfen detektiert und in ein elektrisches Signal konvertiert zu werden, und der Zustand des detektierten Signals für jedes der Koordinatenzentren (Xn, Yp) der jeweiligen Oberflächen (S1, S2, S3...) des Gitters (2) bestimmt werden kann.

28. Verfahren nach Anspruch 27, in dem die Dispersion ein benetzendes und dispergierendes Tensid enthält.

29. Verfahren nach Anspruch 27 oder 28, **dadurch gekennzeichnet, dass**:
- das Vorhandensein oder Fehlen von Magnetismus an den Zentren der Oberflächen (S1, S2; S3...) des Gitters (2) detektiert und anschließend in ein elektrisches Signal konvertiert wird,
- der Zustand des detektierten Signals für jedes Koordinatenzentrum (Xn, Yp) der jeweiligen Oberflächen (S1, S2, S3...) des Gitters bestimmt wird,
- die Kombination der Oberflächenzentren, die Magnetismus zeigen, bestimmt wird,
- diese Kombination im Zusammenhang mit der Datei (F) bezüglich eines vorbestimmten Kodiersystems analysiert und dekodiert wird, um die gesuchte Information zu liefern.

30. Verfahren nach einem der vorstehenden Ansprüche 27 oder 29, **dadurch gekennzeichnet, dass** die Markierung mittels wenigstens eines Induktionsschreibkopfs hergestellt wird und die Detektion des Vorhandenseins oder Fehlens von Magnetismus mittels wenigstens eines Magnetwiderstandskopfs erfolgt.

31. Verfahren nach einem der vorstehenden Ansprüche 27 oder 29, **dadurch gekennzeichnet, dass** die Markierung mittels wenigstens eines Induktionsschreibkopfs hergestellt wird und die Detektion des Vorhandenseins oder Fehlens von Magnetismus mittels mehrerer Magnetwiderstandsköpfe erfolgt, die über den Zentren der Oberflächen des Gitters (2) positioniert werden.

32. Verfahren nach dem vorstehenden Anspruch, **dadurch gekennzeichnet, dass** der/die Schreibkopf/Schreibköpfe und der/die Detektionskopf/Detektionsköpfe durch ein softwaregesteuertes System gelenkt werden, das ein Durchlaufen des gesamten Gitters (2) gestattet.

33. Verfahren nach einem der Ansprüche 27 bis 29, **dadurch gekennzeichnet, dass** die zu markierende Information mittels einer Bildanalysesoftware gemäß dem gleichen Gitter analysiert wird wie das Gitter (2).

34. Verfahren nach einem der Ansprüche 27 bis 33, **dadurch gekennzeichnet, dass** die dekodierte Information mittels einer Bildrekonstruktionssoftware visuell rekonstruiert wird.

35. Gegenstand, der die magnetische Markierung einer Information bezüglich eines Produkts und das Dekodieren der Markierung eines Substrats gestattet, mit:
- einem Substrat (1) gemäß einem der Ansprüche 1 bis 18, das hinsichtlich der Information in Verbindung mit dem Produkt steht,
- einer magnetischen Schreibeinrichtung, die die magnetische Markierung des Substrats (1) herstellt,
- einer Einrichtung zur Detektion des Vorhandenseins oder Fehlens von Magnetismus gemäß einer visuellen Markierung auf dem Substrat,
- einer Einrichtung zum Konvertieren des Magnetismus jedes Zentrums der jeweiligen Oberflächen (S1, S2, S3...) in ein elektrisches Signal,
- einer Einrichtung zum Bestimmen der Koordinatenzentren der Magnetismus zeigenden Oberflächen, um eine Verbindung zur magnetischen Markierung zu ermitteln,
- einer Einrichtung zum Übersetzen dieser Koordinatenverbindung in die genannte Information gemäß dem vorbestimmten Kodiersystem.

36. Gegenstand, der die magnetische Markierung einer Information bezüglich eines Produkts und das Dekodieren der Markierung eines Substrats gestattet, mit:
- einem Substrat (1) gemäß einem der Ansprüche 1 bis 18, das mit dem Produkt verbunden ist,
- einer magnetischen Schreibeinrichtung, die die magnetische Markierung einer Information bezüglich des Produkts auf dem Substrat (1) herstellt,
- einer Einrichtung zur Detektion des Vorhandenseins oder Fehlens von Magnetismus gemäß einem Winkel des Produkts oder einem Winkel des Substrats,
- einer Einrichtung zum Konvertieren des Magnetismus jedes Zentrums der jeweiligen Oberflächen (S1, S2, S3...) in ein elektrisches Signal,
- einer Einrichtung zum Bestimmen der Koordinatenzentren der Magnetismus zeigenden Oberflächen, um eine Verbindung zur magnetischen Markierung zu ermitteln,
- einer Einrichtung zum Übersetzen dieser Koordinatenverbindung in die genannte Information gemäß dem vorbestimmten Kodiersystem.

37. Gegenstand nach einem der Ansprüche 35 und 36, **dadurch gekennzeichnet, dass** er eine Einrichtung (9) aufweist, die die wiederhergestellte alphanumerisehe oder grafische Information in Sprachform übersetzt.

38. Gegenstand nach einem der Ansprüche 35 bis 37, **dadurch gekennzeichnet, dass** der/die magnetischen Schreibköpfe vom Induktionstyp ist/sind.

39. Gegenstand nach einem der Ansprüche 35 bis 38, **dadurch gekennzeichnet, dass** der/die Magnetdetektionsköpfe vom Magnetwiderstandstyp ist/sind.

40. Gegenstand nach einem der Ansprüche 35 bis 39, **dadurch gekennzeichnet, dass** die Einrichtung zum Schreiben oder Lesen ausgewählt ist aus Einrichtungen mit einem oder mehreren beweglichen Köpfen und Einrichtungen mit festen Köpfen einer Anzahl, die der Anzahl der Oberflächen (S1, S2, S3,...), die das Gitter bilden, gleich ist und über den Oberflächenzentren des Gitters positioniert sind.

41. Gegenstand nach einem der Ansprüche 35 bis 40, **dadurch gekennzeichnet, dass** die Detektionseinrichtung ausgewählt ist aus Einrichtungen mit einem oder mehreren beweglichen Köpfen und Einrichtungen mit festen Köpfen, deren Anzahl der Anzahl von Oberflächen (S1, S2, S3, ...), die das Gitter bilden, gleich ist.

42. Gegenstand nach einem der Ansprüche 35 bis 41, **dadurch gekennzeichnet, dass** die Schreibeinrichtung mit einem sofwaregesteuerten Lenkungssystem verbunden ist, das die Koordinaten (Xn, Yp) der jeweiligen zu magnetisierenden. Oberflächenzentren in Verbindung mit dem vorbestimmten Kodiersystem erzeugt.

43. Gegenstand nach einem der Ansprüche 35 bis 42, **dadurch gekennzeichnet, dass** die Detektionseinrichtung verbunden ist mit:
- einem sofwaregesteuerten Lenkungssystem, das dem/den Detektionsköpfen ein Durchlaufen des gesamten Gitters (2) ennöglicht,
- einem System zur Analyse des durch die Detektionsköpfe gelesenen Signals,
- einer Software, die eine Bestimmung der Koordinatcnzentren der magnetisierten Oberflächen erlaubt, um eine Verknüpfung zur magnetischen Markierung herzustellen,
- einer Software, die ein Übersetzen dieser Verknüpfung in die genannten Information in Verbindung mit der Datei (F) bezüglich des vorbestimmten Kodicrsystems ermöglicht.
